(19) Europäisches Patentamt
European Patent Office
Office européen des brevets

(11) **EP 2 751 956 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(21) Anmeldenummer: **12751496.6**

(22) Anmeldetag: **24.08.2012**

(51) Int Cl.:
*H04L 12/413* (2006.01)   *H04L 12/40* (2006.01)

(86) Internationale Anmeldenummer:
**PCT/EP2012/066469**

(87) Internationale Veröffentlichungsnummer:
**WO 2013/030095 (07.03.2013 Gazette 2013/10)**

(54) **VERFAHREN UND VORRICHTUNG ZUR PRÜFUNG DER KORREKTEN FUNKTION EINER SERIELLEN DATENÜBERTRAGUNG**

METHOD AND APPARATUS FOR THE VERIFICATION OF THE CORRECT FUNCTION OF A SERIAL DATA TRANSMISSION

PROCÉDÉ ET ÉQUIPEMENT POUR LA VÉRIFICATION DU FONCTIONNEMENT CORRECT D'UNE TRANSMISSION SÉRIE DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2011 DE 102011081733**
**24.01.2012 DE 102012200997**

(43) Veröffentlichungstag der Anmeldung:
**09.07.2014 Patentblatt 2014/28**

(73) Patentinhaber: **Robert Bosch GmbH**
**70442 Stuttgart (DE)**

(72) Erfinder:
• **HARTWICH, Florian**
**72762 Reutlingen (DE)**
• **BAILER, Franz**
**72116 Moessingen (DE)**
• **HORST, Christian**
**72144 Dusslingen (DE)**
• **MUTTER, Arthur**
**70771 Leinfelden (DE)**

(56) Entgegenhaltungen:
**EP-A1- 2 521 319**

• **BOSCH GMBH: "CAN with Flexible Data-Rate", CAN WITH FLEXIBLE DATA-RATE WHITE PAPER, , Nr. Version 1.1 2. Mai 2011 (2011-05-02), Seiten 1-16, XP007921281, Gefunden im Internet: URL:http://www.bosch-semiconductors.de/media/pdf/canliteratur/can_fd.pdf [gefunden am 2012-11-01]**
• **CENA G ET AL: "Overclocking of controller area networks", ELECTRONICS LETTERS, IEE STEVENAGE, GB, Bd. 35, Nr. 22, 28. Oktober 1999 (1999-10-28), Seiten 1923-1925, XP006012867, ISSN: 0013-5194, DOI: 10.1049/EL:19991289**
• **"Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]**

**Beschreibung**

Stand der Technik

Die Erfindung betrifft ein Verfahren sowie eine Vorrichtung zur seriellen Datenübertragung zwischen wenigstens zwei Teilnehmern in einem Bussystem.

Beispielsweise aus den Normen der Familie ISO 11898-1 bis -5 ist das Controller Area Network (CAN) sowie eine als "Time Triggered CAN" (TTCAN) bezeichnete Erweiterung des CAN bekannt, im Folgenden auch als Norm CAN bezeichnet. Das beim CAN verwendete Medienzugriffssteuerverfahren beruht auf einer bitweisen Arbitrierung. Bei CAN wird die bitweise Arbitrierung anhand eines führenden Identifiers innerhalb der über den Bus zu übertragenden Nachricht vorgenommen.

Bei der bitweisen Arbitrierung können mehrere Teilnehmerstationen gleichzeitig Daten über das Bussystem übertragen, ohne dass hierdurch die Datenübertragung gestört wird. Die Teilnehmerstationen können beim Senden eines Bits über den Bus (Sendesignal) parallel den logischen Zustand (0 oder 1) des Busses (Empfangssignal) ermitteln. Hierzu wird das auf dem Sendekanal übermittelte Sendesignal immer wieder mit dem Empfangssignal verglichen. Liegt zu einem bestimmten Zeitpunkt, dem Sample-Punkt, keine Übereinstimmung vor, so beendet der Busteilnehmer die Sendetätigkeit, denn es muss davon ausgegangen werden, dass ein anderer Busteilnehmer eine Nachricht mit höherer Priorität beziehungsweise niedrigerem Identifier zu übermitteln versucht. Das Empfangssignal stellt eine Überlagerung der Nachrichten-Bits aller Busteilnehmer dar, die während der Arbitrierung Zugriff auf den Bus zu erreichen versuchen. Wegen der Laufzeiten der Signale auf den Busleitungen und wegen intrinsischer Verzögerungszeiten in den Busanschlusseinheiten (Transceiver) liegt das Ergebnis der Überlagerung dieser Signale erst spät innerhalb des Bitzeitraums vor, so dass der Sample-Punkt relativ weit hinten innerhalb des Bitzeitraumes liegen muss. Unter anderem diese Tatsache begrenzt die zulässigen Bitlängen bei CAN nach unten. Eine Verkürzung ist nicht ohne weiteres möglich.

Nachdem eine Teilnehmerstation den Identifier vollständig gesendet hat, steht fest, dass diese Station die Arbitrierung gewonnen und somit exklusiven Zugriff auf den Bus hat. Gemäß der Protokollspezifikation des CAN dürfen andere Teilnehmerstationen so lange nicht Daten über den Bus senden, bis die sendende Teilnehmerstation ein Prüfsummenfeld (CRC-Feld, CRC Field, "CRC Checksumme") der Nachricht übertragen hat. Somit entspricht der Endzeitpunkt der Übertragung des CRC Fields einem Ende eines Intervalls, in welchem die sendende Teilnehmerstation als Empfangssignal lediglich das von ihr selbst gesendete Sendesignal sieht, das im Wesentlichen nur durch die intrinsische Verzögerungszeit der Busanschlusseinheit verzögert wird. In diesem Intervall wird der beschriebene Vergleich zwischen Sende- und Empfangssignal weiter durchgeführt und dazu genutzt, Fehler bei der Übertragung der Daten zu detektieren beziehungsweise Fehlermeldungen durch andere Busteilnehmer festzustellen.

Durch das Protokoll wird eine zerstörungsfreie, sichere Übertragung derjenigen Nachricht über den Bus erreicht, deren Sender das Arbitrierungsverfahren gewonnen hat. Die Protokolle des CAN eignen sich besonders zum Übertragen kurzer Meldungen unter Echtzeitbedingungen, wobei durch geeignete Zuweisung der Identifier sichergestellt werden kann, dass für besonders wichtige Nachrichten nahezu immer die Arbitrierung gewonnen wird und die entsprechende Nachricht erfolgreich versendet wird.

Beispielsweise durch die Übertragung eines aus den zuvor in der Nachricht übertragenen Daten mittels eines Generator-Polynoms gebildeten CRC-Feldes und Durchführung einer CRC-Prüfung auf Empfängerseite, sowie durch die laufende Prüfung der Übereinstimmung zwischen Sende- und Empfangssignal ist eine hohe Übertragungssicherheit beziehungsweise Fehlererkennungszuverlässigkeit gegeben.

Mit der zunehmenden Vernetzung moderner Fahrzeuge und dem Einzug zusätzlicher Systeme zur Verbesserung beispielsweise der Fahrsicherheit oder des Fahrkomforts wachsen die Anforderungen an die zu übertragenden Datenmengen, die Übertragungsrate, die Übertragungssicherheit und die bei der Übertragung zulässigen Latenzzeiten. Beispiele sind Fahrdynamikregelsysteme wie z.B. das elektronische Stabilitätsprogramm ESP, Fahrerassistenzsysteme wie z.B. die automatische Abstandsregelung ACC, oder

Fahrerinformationssysteme wie z.B. die Verkehrszeichenerkennung (vgl. beispielsweise Beschreibungen in "Bosch Kraftfahrtechnisches Handbuch", 27. Auflage, 2011, Vieweg+Teubner).

Das am 02.05.2011 auf der Internet-Seite http://www.semiconductors.bosch.de/ veröffentlichte Dokument "CAN with Flexible Data-Rate, White Paper, Version 1.0" stellt ein modifiziertes Datenübertragungsprotokoll vor, welches unter anderem eine Vergrößerung des Datenfeldes, sowie für einen Teil der CAN-Nachricht nach erfolgter Arbitrierung eine Verkürzung der Bitlänge ermöglicht.

Die Verkürzung der Bitlänge ist in diesem Bereich unter anderem durch die intrinsische Verzögerungszeit der Busanschlusseinheiten begrenzt, denn bevor ein Bit übertragen wird, muss die Übereinstimmung zwischen Sende- und Empfangssignal für das vorangegangene Bit geprüft sein. Es zeigt sich, dass der Stand der Technik im Hinblick auf eine Steigerung der Datenübertragungsrate und/oder -sicherheit nicht in jeder Hinsicht befriedigende Ergebnisse liefert.

Das Dokument XP007921281, "CAN with Flexible Data-Rate", CAN WITH FLEXIBLE DATA-RATE WHITE PAPER, Version 1.1, zeigt das Präambel der Ansprüche 1 und 28.

Offenbarung der Erfindung

Im Folgenden wird die Erfindung mit ihren Vorteilen anhand von Zeichnungen und Ausführungsbeispielen beschrieben. Der Gegenstand der Erfindung ist nicht auf die dargestellten und geschilderten Ausführungsbeispiele beschränkt.

Vorteile der Erfindung

Die vorliegende Erfindung geht aus von einem Verfahren zur seriellen Datenübertragung in einem Bussystem mit mindestens zwei Busteilnehmern, die über den Bus Nachrichten austauschen, wobei der Sendezugriff auf den Bus für jede Nachricht durch das Arbitrierungsverfahren gemäß der CAN-Norm ISO 11898-1 an einen Busteilnehmer vergeben wird, welcher dadurch für diese Nachricht zum Sender wird, wobei die Nachrichten einen logischen Aufbau gemäß der CAN-Norm aufweisen, also aus Start-of-Frame-Bit, Arbitration Field, Control Field, Data Field, CRC Field, Acknowledge Field und End-of-Frame-Field aufgebaut sind, und wobei durch einen Vergleich eines an die Busanschlusseinheit gesendeten Sendesignales (CAN_TX) mit dem von der Busanschlusseinheit empfangenen Empfangssignal (CAN_RX) die korrekte Funktion der Datenübertragung laufend geprüft wird.

Das erfindungsgemäße Verfahren zeichnet sich dadurch aus, dass im Sender ein gegenüber dem Sendesignal um eine Verzögerungszeit verzögertes Sendesignal vorgehalten wird, wobei abhängig von einer Umschaltung für die Prüfung der korrekten Funktion der Datenübertragung das unverzögerte Sendesignal oder das verzögerte Sendesignal verwendet wird. Dadurch kann in vorteilhafter Weise in Fällen, wenn eine im Wesentlichen feste Zeitverzögerung zwischen Sendeund Empfangssignal besteht, diese Zeitverzögerung vor der Prüfung der korrekten Funktion der Datenübertragung kompensiert werden.

Die Möglichkeit einer Umschaltung innerhalb des Sendevorgangs einer einzigen Nachricht zwischen der Verwendung des unverzögerten Sendesignals und der Verwendung des verzögerten Sendesignals hat den Vorteil, dass das Verfahren gezielt nur in den Bereichen der Nachricht eingesetzt werden kann, in denen eine im Wesentlichen feste Zeitverzögerung zwischen Sende- und Empfangssignal vorliegt. Insbesondere kann so gewährleistet werden, dass die Umschaltung frühestens nach erfolgter Vergabe des Sendezugriffes an einen Busteilnehmer stattfindet.

Falls die auftretenden Zeitverzögerungen im Wesentlichen unabhängig von äußeren Parametern wie z.B. Temperatur etc. sind, kann es von Vorteil sein, wenn die Verzögerungszeit fest vorgegeben oder etwa im Rahmen einer initialen Konfiguration vorgebbar ist. In einer besonders vorteilhaften Ausführungsform ist die Verzögerungszeit dynamisch vorgebbar und von der Ermittlung einer Zeitverzögerung abhängig. Dadurch können laufende Veränderungen der Zeitverzögerung im Betrieb berücksichtigt werden, was unter anderem die Robustheit des Verfahrens erhöht.

Die angesprochene Ermittlung einer Zeitverzögerung umfasst vorteilhafterweise die Ermittlung von jeweils wenigstens einem Signalwechsel oder einer Signalflanke im unverzögerten Sendesignal und im Empfangssignal, da derartige Signalwechsel besonders gut zum Start beziehungsweise zur Beendigung einer Zeitmessung geeignet sind. Es ist weiter von Vorteil, wenn neben der Verzögerungszeit aus dem Ergebnis der Zeitmessung auch ein Vergleichzeitpunkt (T_CMP) für die Prüfung der korrekten Funktion der Datenübertragung bestimmt wird, da dieser Zeitpunkt dann optimal an die vorliegende Zeitverzögerung zwischen Sende- und Empfangssignal adaptiert werden kann und wiederum die Robustheit der Prüfung erhöht wird. Wird hier die Summe aus ermittelter Zeitverzögerung und der halben Bitlänge verwendet, so wird stets in der Mitte des empfangenen Signales abgetastet. Dies ist besonders vorteilhaft für eine zuverlässige Abtastung und Prüfung des Empfangssignals.

Wenn die Umschaltung durch das Erreichen oder die Auswertung eines vorgegebenen oder vorgebbaren Bits innerhalb der gerade gesendeten Nachricht stattfindet, ist das Verfahren besonders transparent und einfach zu implementieren. Eine Umschaltung durch Anlegen eines dafür vorgesehenen Signals an eine Umschalteinheit hat den Vorteil, dass die Umschaltung beispielsweise durch den Kommunikationscontroller oder Mikroprozessor auf besonders flexible Weise vorgenommen werden kann.

Vorteilhafterweise sind die Nachrichten, welche auf die erfindungsgemäßen Verfahren geprüft werden sollen, durch eine geeignete Kennzeichnung gekennzeichnet, denn so können die erfindungsgemäßen Vorrichtungen, die die Nachrichten austauschen, erkennen, ob die Kommunikation nach dem normgemäßen oder dem erfindungsgemäßen Verfahren erfolgt. Bei Vorliegen dieser Kennzeichnung weist das Control Field der Nachrichten in einer vorteilhaften Ausprägung mehr als sechs Bit auf. Dadurch kann es eingerichtet werden, dass die Kennzeichnung durch ein rezessives Bit erfolgt, auf welches in allen Daten-Nachrichten wenigstens ein dominantes Bit folgt. In diesem Fall kann diese Flanke zwischen dem rezessiven Bit der ersten Kennzeichnung und dem wenigstens einen folgenden dominanten Bit zur Ermittlung des Zeitversatzes zwischen unverzögertem Sendesignal und dem Empfangssignal genutzt werden, was den Vorteil hat, dass dadurch die Genauigkeit der Ermittlung der Zeitverzögerung erhöht wird, insbesondere wenn die Flanken von "rezessiv" nach "dominant" besonders steile Flanken aufweisen.

Eine gleichzeitige Vergrößerung des Datenfelds der erfindungsgemäßen Nachrichten auf mehr als acht Byte bringt den zusätzlichen Vorteil mit sich, dass größere Datenmengen innerhalb einer Nachricht übertragen werden können und sich das Verhältnis von Nutzdaten zu protokollrelevanten Steuerdaten vorteilhaft verändert. Zur Feststellung der Größe des Datenfeldes müssen die Werte der vier Bits des Data Length Codes dann zumindest teilweise abweichend von der CAN-Norm interpretiert werden.

Ein weiterer Vorteil des erfindungsgemäßen Verfahrens entsteht, wenn zusätzlich die Bitlänge für wenigstens einen vorgegebenen oder vorgebbaren Bereich innerhalb der Nachricht einen gegenüber der vorher verwendeten Bitlänge verkürzten Wert annimmt. Hier zeigt sich als besonderer Vorteil des Verfahrens, dass auch Bitlängen verwendet werden können, die unterhalb der intrinsischen Zeitverzögerung der Busanschlusseinheit liegen. Ohne die erfindungsgemäße Kompensation würde der Vergleich zwischen unverzögertem Sendesignal und Empfangssignal in diesem Fall irrtümlich zur Erkennung eines Übertragungsfehlers führen. Derartig modifizierte Nachrichten können durch eine zweite Kennzeichnung erkennbar gemacht werden. Zusätzlich kann durch diese Modifikation die pro Zeit übertragene Datenmenge weiter gesteigert werden. Der Bereich beginnt vorteilhafterweise frühestens mit der zweiten Kennzeichnung und muss spätestens mit dem CRC Delimiter enden. Vorteilhafterweise werden die unterschiedlichen Werte der Bitlänge durch Verwendung unterschiedlicher Skalierungsfaktoren (Prescaler) zur Einstellung der Bus-Zeiteinheit relativ zu einer kleinsten Zeiteinheit oder dem Oszillatortakt realisiert. Die Robustheit des Verfahrens wird weiter gesteigert, wenn in den Bereichen längerer und kürzerer Bitlänge unterschiedliche Werte für die Bit-Timing-Parameter verwendet werden.

Die zweite Kennzeichnung hat den Vorteil, dass die Vorteile der beiden Maßnahmen auch separat ausgenutzt werden können. Beispielsweise können auch dann, wenn aus Gründen der Bustopologie die Umschaltung auf kürzere Bitlänge nicht möglich ist, weiterhin Nachrichten nach dem erfindungsgemäßen Verfahren geprüft werden und mit einer höheren Datenmenge versendet werden. Auch kann bei Auftreten von Fehlern in Nachrichten mit verkürzter Bitlänge zunächst auf die normale Bitlänge umgeschaltet werden, ohne die weiteren Vorteile zu opfern.

Das Verfahren ist vorteilhaft einsetzbar im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist. Eine weitere vorteilhafte Einsatzmöglichkeit besteht beim Betrieb von industriellen Steueranlagen, insbesondere bei langen Verbindungsleitungen. In allen Fällen ist die Flexibilität in der Übertragungsrate bei gleichzeitiger, sehr hoher Übertragungssicherheit vorteilhaft, um das Übertragungsverfahren an die jeweiligen Gegebenheiten wie z.B. die Signallaufzeiten anzupassen.

Ein weiterer Vorteil ist, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Das zugehörige Anwendungs-Programm muss nicht geändert werden, und schon dann werden Vorteile in der Geschwindigkeit der Datenübertragung erzielt.

Es können in vorteilhafter Weise erhebliche Teile des CAN-Conformance-Tests (ISO 16845) übernommen werden. In einer vorteilhaften Ausprägung kann das erfindungsgemäße Übertragungsverfahren mit den Ergänzungen des TTCAN (ISO 11898-4) kombiniert werden.

Zeichnungen

Die Erfindung wird im Weiteren anhand der Zeichnungen näher erläutert.

Figur 1a zeigt die zwei Alternativen für den Aufbau von Daten-Nachrichten gemäß der CAN-Norm ISO 11898-1, das CAN Standard Format und das CAN Extended Format.

Figur 1b zeigt zwei Beispiele für das Format von demgegenüber modifizierten "CAN FD Long" Nachrichten mit geändertem Control Field und flexibler Größe von Datenfeld und CRC Field. Dargestellt sind sowohl eine Modifikation einer Standard CAN Nachricht, als auch eine Modifikation einer Extended CAN Nachricht.

Figur 1c zeigt zwei weitere Beispiele für in dem erfindungsgemäßen Datenübertragungsverfahren modifizierten Nachrichten vom Typ "CAN FD Fast", bei welchen gegenüber Figur 1b zusätzlich Bereiche innerhalb der Nachricht festgelegt sind, in welchen eine unterschiedliche Bitlänge verwendet wird.

Figur 2a zeigt beispielhaft die erfindungsgemäße Verzögerung des Sendesignals um eine Zeitspanne T_DELAY, um die etwa durch die Busanschlusseinheit verursachte Zeitverzögerung des Empfangssignals zu kompensieren.

Figur 2b zeigt schematisch die Messung der Zeitverzögerung DELTA_T zwischen Sendesignal CAN_TX und Empfangssignal CAN_RX anhand einer festgelegten Signalflanke von einem rezessiven zu einem dominanten Bit.

Figur 2c stellt den Einfluss der erfindungsgemäßen Kompensation der Zeitverzögerung des Sendesignals auf das vorliegende Verfahren zur Prüfung der korrekten Datenübertragung schematisch dar.

Figur 3 zeigt ein schematisches Blockschaltbild relevanter Bestandteile eines Ausführungsbeispiels einer erfindungsgemäßen Schaltung.

Beschreibung der Ausführungsbeispiele

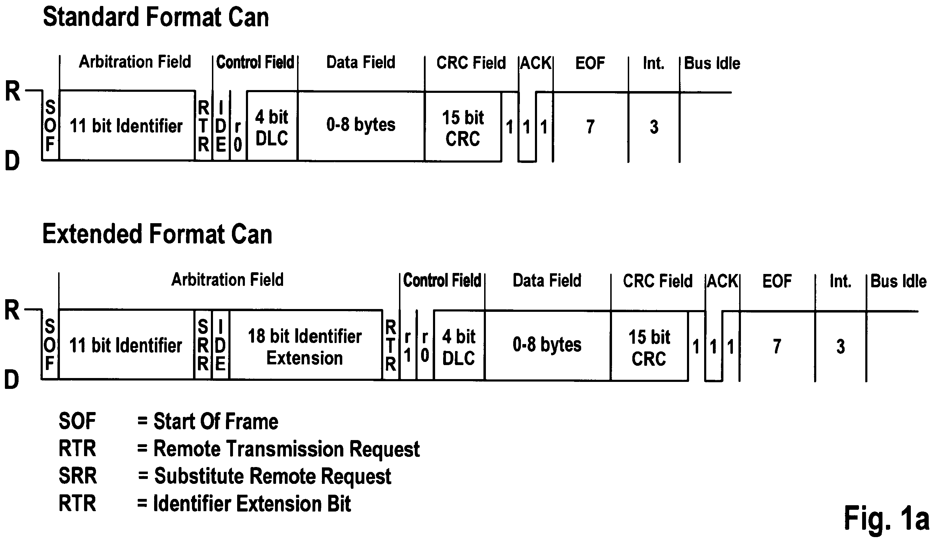

In Figur 1a ist der Aufbau von Nachrichten, wie sie auf einem CAN Bus zur Datenübertragung verwendet werden, dargestellt. Die beiden unterschiedlichen Formate "Standard" und "Extended" sind dargestellt. Das erfindungsgemäße Verfahren ist in geeigneten Ausführungsformen auf beide Formate anwendbar.

Die Nachricht beginnt mit einem "Start of Frame"(SOF)-Bit, das den Beginn der Nachricht signalisiert. Es schließt sich ein Abschnitt an, der in erster Linie zur Identifizierung der Nachricht dient, und anhand dessen die Teilnehmer des Bussystems entscheiden, ob sie die Nachricht empfangen oder nicht. Dieser Abschnitt wird mit "Arbitration Field" bezeichnet und enthält den Identifier. Es folgt ein "Control Field", das unter anderem den Data Length Code enthält. Der Data Length Code enthält Informationen über die Größe des Datenfeldes der Nachricht. Hieran schließt sich das eigentliche Datenfeld "Data Field" an, das die zwischen den Teilnehmern des Bussystems auszutauschenden Daten enthält. Es folgt das "CRC Field" mit der 15 Bit umfassenden Checksumme und einem Delimiter, und anschließend zwei "Acknowledge"(ACK)-Bits, die dazu dienen, den erfolgreichen Empfang einer Nachricht an den Sender zu signalisieren. Abgeschlossen wird die Nachricht durch eine "End of Frame"(EOF)-Sequenz.

Ist eine Nachricht über den Bus zu übertragen, so wird während des Arbitrierungsvorgangs das übliche Prüfungsverfahren, bei dem das unverzögerte Sendesignal mit dem Empfangssignal verglichen wird, durchgeführt, da in dieser Phase noch mehrere Sender am Bus beteiligt sein können und es daher im Allgemeinen keine feste Zeitbeziehung zwischen Sende- und Empfangssignal gibt. Nach erfolgter Arbitrierung, wenn ein Busteilnehmer die Rolle des Senders für eine Nachricht erlangt hat, kann die Robustheit und Genauigkeit des Vergleiches, welcher zwischen Sendesignal und Empfangssignal durchgeführt wird, dadurch erhöht werden, dass die dann im wesentlichen festliegende Zeitverzögerung zwischen Sendesignal und Empfangssignal kompensiert wird.

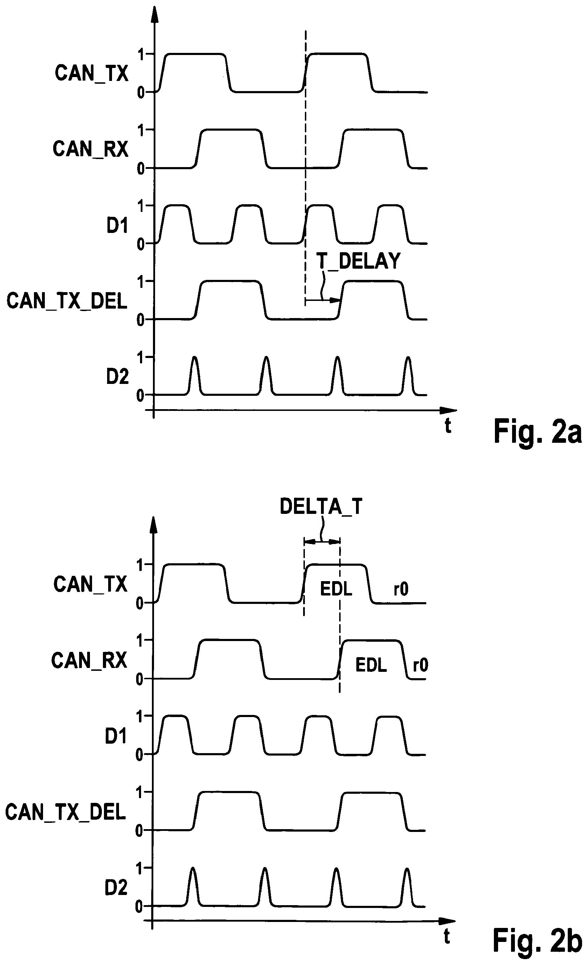

Die Wirkung des erfindungsgemäßen Verfahrens ist in Figur 2a näher dargestellt. CAN TX und CAN RX stellen den zeitlichen Verlauf von Sende- und Empfangssignal dar, die an den entsprechenden Pins einer erfindungsgemäßen Einrichtung, beispielsweise eines Kommunikationscontrollers anliegen. Die Signale wechseln zwischen Spannungswerten, die einer logischen "1" bzw. einer logischen "0" entsprechen. Der Einfachheit halber ist in Figur 2a nur eine Bitfolge 1-0-1-0 dargestellt, an der die Wirkung beispielhaft illustriert werden kann. Die exakten Signalverläufe, wie z.B. Flankensteilheit etc. hängen von Details der jeweiligen Schaltung ab, die für die schematische Darstellung der Wirkung des Verfahrens nicht von Belang sind.

Ein Vergleich beziehungsweise eine Prüfung der beiden logischen Signale CAN_TX und CAN_RX findet in dem üblichen Verfahren durch eine geeignete Schaltung, beispielsweise durch ein XOR-Gatter statt, welches zu diesem Zweck in einer entsprechenden Vorrichtung vorgehalten wird. Diese liefert bei Übereinstimmung der Eingangssignale beispielsweise eine logische "0" am Ausgang und bei Nichtübereinstimmung eine "1". Ein resultierender Signalverlauf ist in Figur 2a als Signal D1 qualitativ dargestellt. Für die Prüfung der korrekten Datenübertragung wird das verknüpfte Signal D1 zu einem bestimmten Zeitpunkt, dem Sample-Punkt, abgetastet. Wie zu erkennen ist, muss der Sample-Punkt so eingestellt werden, dass er in denjenigen Bereich jedes Bits fällt, in welchem das Signal D1 eine "0" anzeigt. Mit wachsender Verzögerung zwischen Sende- und Empfangssignal wird dieser Bereich immer kleiner und eine geeignete Wahl des Sample-Punktes, so dass bei korrekter Übertragung eine "0" im Signal D1 abgetastet wird, wird immer schwieriger.

Um dies zu verbessern und die Robustheit zu erhöhen, wird im erfindungsgemäßen Verfahren das Sendesignal um eine vorgegebene oder vorgebbare Verzögerungszeit T_DELAY verzögert. Die erfindungsgemäße Vorrichtung enthält hierzu vorzugsweise zusätzlich eine geeignete Verzögerungseinheit. Das Ergebnis ist in Figur 2a ebenfalls dargestellt: Man erhält ein zeitverzögertes Sendesignal CAN_TX_DEL. Wird dieses verzögerte Signal der erfindungsgemäßen Schaltung, beispielsweise einem XOR-Gatter, zugeführt und dort mit dem Empfangssignal verknüpft beziehungsweise verglichen, so erhält man ein verknüpftes Signal D2, das schematisch ebenfalls in Figur 2a dargestellt ist. Aufgrund der Kompensation der intrinsischen Zeitverzögerung der Busanschlusseinheit entspricht das Signal D2 in weiten Bereichen einer logischen "0". Im Bereich der Signalwechsel treten aufgrund von Ungenauigkeiten in den Signalpegeln oder der kompensierten Verzögerungszeit noch logische Werte "1" im Signal D2 auf. Eine geeignete Wahl des Sample-Punktes, so dass das Ergebnis des Vergleiches bei korrekt verlaufener Datenübertragung zuverlässig "0" ergibt, ist nun einfach möglich.

Wegen der unterschiedlichen Verhältnisse während der Arbitrierung (keine im wesentlichen festliegende Zeitverzögerung) und danach (im wesentlichen festliegende Zeitverzögerung) ist das beschriebene Verfahren umschaltbar zu gestalten, so dass in der Arbitrierungsphase das übliche Prüfungsverfahren zur Anwendung kommt, während in der späteren Übertragungsphase das erfindungsgemäße Prüfungsverfahren durchgeführt wird. In dieser späteren Übertragungsphase oder in Teilen davon kann auch auf kürzere Bitlängen umgeschalten werden, was später noch ausgeführt wird. In diesem Fall hat das Verfahren den besonderen Vorteil, dass Bitlängen verwendet werden können, die in der gleichen Größenordnung oder sogar unterhalb der intrinsischen Zeitverzögerung der Busanschlusseinheit liegen. Ohne die erfindungsgemäße Kompensation ist dies unmöglich, da der Vergleich zwischen unverzögertem Sendesignal und Empfangssignal dann irrtümlich zur Erkennung eines Übertragungsfehlers führen kann.

Der Wert der Verzögerungszeit T_DELAY kann entweder fest vorgegeben werden, oder vorgebbar gestaltet sein. Eine feste Vorgabe ist vor allem dann sinnvoll, wenn die verwendete Busanschlusseinheit keine sehr breite Variation der intrinsischen Zeitverzögerung aufweist. Eine vorgebbare Verzögerungszeit ist sinnvoll, wenn die intrinsische Zeitverzögerung Abhängigkeiten von bestimmten Größen aufweist, welche im Busteilnehmer vorliegen. Beispielsweise könnte eine Temperaturabhängigkeit kompensiert werden, wenn im Busteilnehmer eine Temperaturinformation vorliegt und dementsprechend unterschiedliche Werte der Verzögerungszeit temperaturabhängig vorgegeben werden können.

In einer bevorzugten Ausführungsform basiert die verwendete Verzögerungszeit T_DELAY auf einer zuvor durchgeführten Messung des Zeitversatzes zwischen Sendesignal und Empfangssignal. Hierfür kann beispielsweise eine rezessivdominant-Signalflanke, die innerhalb der Nachrichten nach abgeschlossener Arbitrierung vorliegt, ausgewertet werden.

Es ist vorteilhaft, wenn ein erfindungsgemäßer Kommunikationscontroller selbständig erkennt, ob die Kommunikation des Bussystems nach Norm CAN oder dem erfindungsgemäßen Verfahren abläuft. Eine Möglichkeit hierzu besteht darin, ein Bit innerhalb des Arbitration Field oder des Control Field, welches im Norm-CAN immer mit einem festen Wert übertragen wird, zur Kennzeichnung heranzuziehen, so dass aus dieser ersten Kennzeichnung der Kommunikationscontroller eine erste Umschaltbedingung ableiten kann, abhängig von der er das anzuwendende Prüfungsverfahren auswählt.

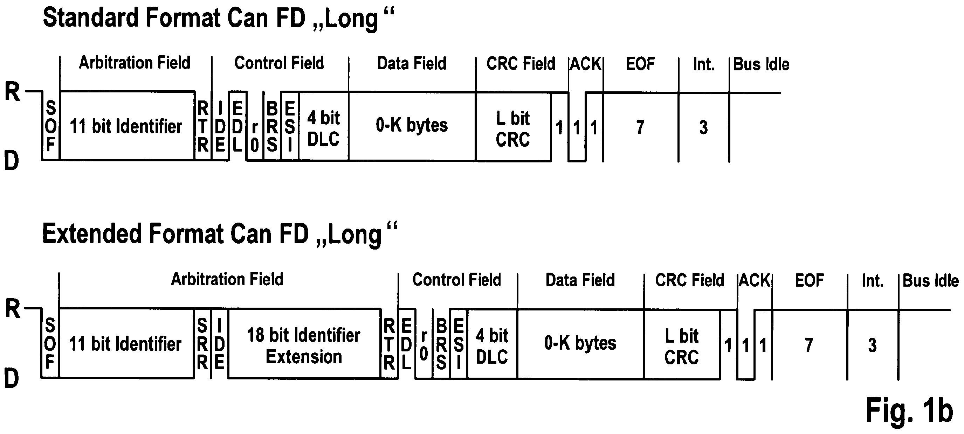

In Figur 1b sind modifizierte Nachrichten-Formate, jeweils abgeleitet von den beiden Norm-Formaten, dargestellt. Sie unterscheiden sich von den normgemäßen Nachrichten aus Figur 1a durch die Ergänzung zusätzlicher Bits im Control Field, also in diesem Beispiel EDL, BRS, ESI. Weiterhin unterscheiden sich im dargestellten Beispiel die erfindungsgemäßen Nachrichten von normgemäßen Nachrichten durch die variable Größe von Data Field und CRC Field, wobei das Datenfeld auch mehr als 8 Byte enthalten darf, nämlich in der dargestellten Ausprägung bis zu K Byte. Für die Realisierung des erfindungsgemäßen Verfahrens können Data Field und CRC Field aber auch normgemäße Größe haben.

Kennzeichnung bei Standard Adressierung:

Das zweite Bit des Control Field von Norm-CAN Daten-Nachrichten wird im Standard Format, wie in Figur 1a im oberen Teil dargestellt, stets dominant gesendet und mit r0 bezeichnet. In dem in Figur 1b im oberen Teil dargestellten Beispiel einer erfindungsgemäßen Nachricht mit Standard Adressierung (d.h. mit einem Arbitration Field gemäß Standard CAN Format) wird dieses zweite Bit des Control Field zur Kennzeichnung verwendet, indem es rezessiv gesendet wird. Ein rezessiver Wert des zweiten Bits des Control Fields in einer solchen Nachricht zeigt also an, dass im Folgenden das von der Norm abweichende Prüfungsverfahren und Nachrichtenformat verwendet wird. Dieses rezessiv übertragene zweite Bit des Control Field einer Nachricht mit Standard Arbitration Field wird mit EDL (Extended Data Length) bezeichnet. Das im Norm-CAN stets dominant übertragene Bit r0 wird in den erfindungsgemäßen Nachrichten durch das rezessive EDL-Bit ersetzt, oder es rückt in den erfindungsgemäßen Nachrichten eine Position nach hinten auf den Platz zwischen dem rezessiven Bit EDL und dem bei Umschaltung der Bitlänge ebenfalls rezessiven Bit BRS. Weiterhin können im Control Field noch weitere Bits eingefügt werden. Dargestellt ist in Figur 1b zum Beispiel ein ESI genanntes Bit. Es könnten an dieser Stelle auch zwei oder mehr Bits eingefügt werden, ohne das erfindungsgemäße Verfahren zu beeinflussen.

Insgesamt wird also die Bitfolge im Control Field von Standard Norm-CAN Nachrichten

{IDE, r0, DLC3, DLC2, DLC1, DLC0}

in erfindungsgemäßen Nachrichten ersetzt durch

{IDE, EDL, N weitere Bits, DLC3, DLC2, DLC1, DLC0}.

In dem in Figur 1b dargestellten Beispiel gilt N=3 mit den eingefügten Bits r0, BRS, ESI. N könnte aber auch beliebige andere Werte größer Null annehmen.

Kennzeichnung bei Extended Adressierung:

Die ersten beiden Bits des Control Field von Norm-CAN Daten-Nachrichten werden im Extended Format, wie in Figur 1a im unteren Teil dargestellt, stets dominant gesendet und mit r1 und r0 bezeichnet. In dem in Figur 1b im unteren Teil dargestellten Beispiel einer erfindungsgemäßen Nachricht mit Extended Adressierung (d.h. mit einem Arbitration Field gemäß Extended CAN Format) wird das erste Bit r1 des Control Field zur Kennzeichnung verwendet, indem es rezessiv gesendet wird. Ein rezessiver Wert des ersten Bits des Control Fields in einer solchen Nachricht zeigt in diesem Fall an, dass im Folgenden das von der Norm abweichende Prüfungsverfahren und Nachrichtenformat verwendet wird. Auch hier wird dieses rezessiv übertragene Bit des Control Field mit EDL (Extended Data Length) bezeichnet. Es ersetzt das reservierte, dominante Bit r1 der Norm-CAN Nachrichten mit Extended Format. Alternativ könnte das dominante Bit r1 auch erhalten bleiben und einen Platz nach hinten rücken, so dass das EDL-Bit als zusätzliches Bit zwischen RTR und r1 eingefügt wäre. Ebenfalls möglich wäre es, das EDL-Bit (rezessiv) als zusätzliches Bit zwischen r1 (dominant) und r0 (dominant) einzufügen. Anschließend können auch in diesem Fall im Control Field noch weitere Bits eingefügt werden. Dargestellt ist in Figur 1b zum Beispiel wieder das ESI genannte Bit. Es könnten auch zwei oder mehr Bits eingefügt werden, ohne das erfindungsgemäße Verfahren zu beeinflussen. Insgesamt wird also die Bitfolge im Control Field von Extended Norm-CAN Nachrichten

$$\{r1, r0, DLC3, DLC2, DLC1, DLC0\}$$

in erfindungsgemäßen Nachrichten ersetzt durch

$$\{EDL, N \text{ weitere Bits}, DLC3, DLC2, DLC1, DLC0\} \text{ oder}$$

$$\{r1, EDL, M \text{ weitere Bits}, DLC3, DLC2, DLC1, DLC0\}.$$

Das in Figur 1b dargestellte Beispiel zeigt die erstgenannte Variante mit N=3, nämlich mit den eingefügten Bits r0, BRS, ESI. N beziehungsweise M könnten aber auch auch beliebige andere Werte größer Null annehmen.

Für Nachrichten, welche eine derartige Kennzeichnung beziehungsweise ein Format wie vorher beschrieben aufweisen, kann eine Messung des tatsächlichen Zeitversatzes zwischen Sendesignal und Empfangssignal in der in Figur 2b dargestellten Weise realisiert werden: Bei geeigneter Wahl der eingefügten Bits liegt beispielsweise zwischen dem rezessiven Bit der Kennzeichnung EDL und dem nachfolgenden Bit r0 immer eine Flanke von rezessiv nach dominant. Es kann auch auf andere Weise, etwa durch Einfügen entsprechender reservierter Bits, in erfindungsgemäß gekennzeichneten Nachrichten eine immer vorkommende Flanke von rezessiv nach dominant erzwungen werden. Eine solche Flanke ist für die Zeitmessung gut geeignet. Beispielsweise indem diese Flanke des Sendesignal einen Zähler startet und die entsprechende Flanke des Empfangssignales diesen Zähler stoppt, kann die tatsächliche Zeitverzögerung DELTA_T, wie in Figur 2b eingezeichnet, für jede einzelne Nachricht ausgemessen werden.

Alternativ kann auch eine stets vorkommende Flanke von dominant nach rezessiv verwendet werden. Es kann in regelmäßigen Abständen oder nur einmalig eine entsprechende Messung durchgeführt werden. Die regelmäßige, insbesondere für jede Nachricht stattfindende Messung der Zeitverzögerung hat den Vorteil, dass Änderungen in der tatsächlichen Zeitverzögerung, die beispielsweise durch Temperatureinflüsse entstehen können, zuverlässig kompensiert werden können.

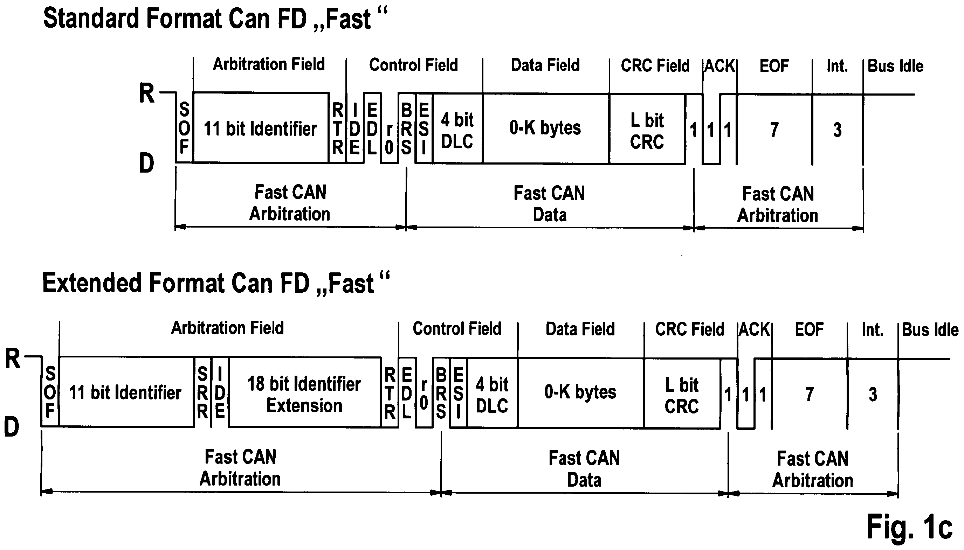

Wie bereits ausgeführt wurde, ist es von Vorteil, wenn eine rezessiv-dominant-Signalflanke, die innerhalb der Nachrichten nach abgeschlossener Arbitrierung vorliegt, zur Ermittlung von DELTA_T ausgewertet wird. Da es hier sicher keine konkurrierenden Sender mehr am Bus gibt, liegt bei dem als Sender verbleibenden Busteilnehmer eine im wesentlichen feste Zeitbeziehung zwischen Sende- und Empfangssignal vor. Werden beispielsweise die im Control Field eingefügten Bits so gewählt, wie in Figur 1c dargestellt, so ist die rezessivdominant-Signalflanke zwischen EDL-Bit und r0-Bit die einzige immer fallende Flanke in einer CAN FD Nachricht vor dem Beginn der Übertragung des Datenfeldes, in der es sicher keinen konkurrierenden Sender mehr gibt. Eine Bestimmung von DELTA_T anhand dieser Signalflanke liefert daher ein gutes Ergebnis, sofern keine sonstigen Störungen auf dem Bus auftreten.

Solche sonstige Störungen, die die Güte der Messung der internen Verzögerung der Busanschlusseinheit DELTA_T beeinträchtigen können, können beispielsweise durch Leitungsstörungen aller Art, elektromagnetische Einstrahlungen, induktive oder kapazitive Einkopplungen oder Ähnliches hervorgerufen werden. Eine Störung während der Messung kann einerseits dazu führen, dass der Sender fälschlicherweise einen bit-error feststellt und die Übertragung der Nachricht abbricht. Andererseits kann aber auch ein fehlerhafter Messwert für DELTA_T ermittelt und nicht als fehlerhaft erkannt werden. Die nachfolgende Kompensation der Zeitverzögerung würde sich jedenfalls im Ergebnis verschlechtern. Um den Einfluss eines Einzelfehlers bei der Ermittlung von DELTA_T auf das Verfahren zu reduzieren, wird daher vorteilhafter Weise ein Mittelwert DELTA_T_MEAN aus mehreren Messungen von DELTA_T gebildet, um zu einem verlässlicheren Resultat zu kommen.

Es wird aus mehreren nacheinander ermittelten Werten, beispielsweise den anhand der Flanke des EDL-Bits ermittelten Messwerten DELTA_T aus mehreren aufeinander folgend gesendeten Nachrichten ein Mittelwert DELTA_T_MEAN gebildet. Für das Verfahren zur Mittelwertbildung können hierbei alle möglichen für derartige Aufgabenstellungen dem Fachmann bekannten Mittelungs- beziehungsweise Filter-Verfahren herangezogen werden, wie z.B. eine gewichtete oder ungewichtete gleitende Mittelwertbildung.

In einer besonders vorteilhaften Ausführungsform werden bei der Mittelwertbildung diejenigen Messwerte, die stark vom zuletzt bestimmten Mittelwert abweichen, aussortiert. Sie beruhen beispielsweise mit höherer Wahrscheinlichkeit auf einer gestörten Messung und können daher verworfen werden. Der Schwellwert für die Differenz oder der Grenzwert für das Verhältnis von einem aktuell vorliegenden Messwert und dem zuletzt bestimmten Mittelwert DELTA_T_MEAN, ab welchem die Abweichung vom oder das Verhältnis zum Mittelwert als betragsmäßig zu groß eingestuft wird, ist vorteilhafterweise einstellbar.

Für die beispielsweise gleitende Mittelwertbildung wird in den entsprechenden Kommunikationscontrollern ein geeigneter Speicherbereich zur Verwaltung einer Liste von N Einträgen DELTA_T_1, ..., bis DELTA_T_N vorgehalten. Diese Liste der berücksichtigten Messwerte arbeitet beispielsweise als FIFO, das heisst der jeweils neueste Messwert ersetzt den jeweils ältesten Messwert. Aus den Werten der Liste ergibt sich durch ein geeignetes Steuerwerk der gewünschte Mittelwert DELTA_T_MEAN, wie bereits angegeben beispielsweise als arithmethischer Mittelwert, als gewichteter Mittelwert, als quadratisches Mittel, oder nach sonst einem Verfahren, das sich in Hardware darstellen lässt. Der Mittelwert wird dann in einem Speicher zur Nutzung für das erfindungsgemäße Verfahren bereitgestellt.

Nach dem Einschalten ist die beschriebene Liste von N Messwerten, aus denen der Mittelwert gebildet werden soll, zunächst leer oder weist zufällige Einträge auf. Da der Mittelwert DELTA_T_MEAN durch ein in Hardware dargestelltes Verfahren beziehungsweise ein Steuerwerk aus den Listen-Einträgen DELTA_T_1, ..., bis DELTA_T_N gebildet werden soll, muss ein Vorgehen festgelegt werden, wie der gewünschte Mittelwert gebildet wird, wenn einige Listen-Einträge noch nicht gültig sind. Beispielsweise die folgenden drei Strategien können angewendet werden:

Strategie 1: Die Hardware wird dahingehend erweitert, dass die Listen-Einträge durch entsprechende Messungen freigeschaltet werden müssen, bevor sie an der Mittelwert-Bildung teilnehmen. Im ersten Schritt wird also die Mittelwertbildung nur mit einem Messwert (beispielsweise DELTA_T_1, sofern dieser alös erster durch eine Messung befüllt wird) durchgeführt, im zweiten Schritt dann mit zwei Messwerten, und so weiter, bis alle Listeneinträge auf Messungen basieren und dementsprechend freigeschaltet sind. Die für dieses Vorgehen erforderliche Logik macht die Schaltung größer.

Strategie 2: Alle rezessiv-dominant-Flanken am Anfang einer Nachricht bis zur Flanke zwischen EDL- und r0-Bit werden bei Systemstart ausgemessen, so dass - vorausgesetzt die Listenlänge N ist kleiner, als die Anzahl der in der Nachricht bis dahin auftretenden rezessiv-dominant-Flanken - schon bei der ersten Mittelwertbildung alle Listeneinträge von mehr oder weniger genauen Einzelmessungen der Zeitverzögerung DELTA_T herrühren. Hier wird die Schaltung nur unwesentlich vergrößert.

Strategie 3: Um die Liste initial zu füllen, wird der erste an der gewünschten Flanke, also beispielsweise an der rezessiv-dominant-Flanke zwischen EDL- und r0-Bit ermittelte Messwert DELTA_T_1 auf allen Listen-Positionen eingetragen. Anschließend werden die weiteren Messwerte dann sukzessive in die Listenplätze 2 bis N eingetragen. Auch hier wird die Schaltung nur unwesenlich vergrößert.

In allen drei Fällen kann - wenn überhaupt vorgesehen - die Methode, nach der Messwerte, die zu stark vom zuletzt gebildeten Mittelwert DELTA_T_MEAN abweichen, aussortiert werden, zumindest so lange ausgesetzt werden, bis alle Listen-Einträge nur auf Messungen an der gewünschten (beispielsweise EDL-r0-) Flanke von unterschiedlichen Nachrichten beruhen.

Im Folgenden kann mit DELTA_T immer auch der aus mehreren Messwerten durch die angesprochene Mittelwertbildung erzeugte Wert DELTA_T_MEAN gemeint sein.

Aus der ermittelten Zeitverzögerung DELTA_T beziehungsweise dem Mittelwert DELTA_T_MEAN wird dann die Verzögerungszeit T_DELAY abgeleitet, die beispielsweise gefiltert oder korrigiert oder auf ganze Vielfache einer bestimmten Zeitbasis, wie zum Beispiel der Bitlänge, angepasst oder gerundet wird. In einer besonders einfachen Ausführungsform ist die Verzögerungszeit T_DELAY gegeben durch den auf die nächste ganze Zahl gerundeten Quotienten (DELTA_T / Bitlänge) multipliziert mit der Bitlänge. Bei einer gemessenen Zeitverzögerung DELTA_T von 150 Nanosekunden und einer Bitlänge von beispielsweise 250 Nanosekunden (entsprechend einer Baudrate von 4 Mbit/s) würde die Verzögerungszeit T_DELAY also 250 Nanosekunden betragen. Bei einer gemessenen Zeitverzögerung DELTA_T von 100 Nanosekunden würde sich hingegen ein Wert T_DELAY von Null ergeben.

Die auf diese Weise generierte Verzögerungszeit T_DELAY dient der dafür eingerichteten Verzögerungseinheit als Eingangsgröße, um ein um diese Zeit T_DELAY verzögertes Sendesignal CAN_TX_DEL ausgehend vom ursprünglichen Sendesignal CAN_TX zur Verfügung zu stellen, wie in Figur 2a bereits dargestellt wurde. Wird das verzögerte Sendesignal CAN_TX_DEL für den Vergleich beziehungsweise die XOR-Verknüpfung mit dem Empfangssignal CAN_RX herangezogen, ist der Einfluss der intrinsischen Zeitverzögerung der Busanschlusseinheit auf das Ergebnis erheblich verringert, wie in Figur 2a an dem schematisch dargestellten Ergebnis-Signal D2 zu erkennen ist.

Die Umschaltung auf das erfindungsgemäße Prüfungsverfahren, welches das verzögerte Sendesignal verwendet, findet in einer vorteilhaften Ausführungsform unmittelbar nach erfolgter Messung der Zeitverzögerung, beispielsweise am Sample-Punkt des Bits r0 oder dem Sample-Punkt des darauf folgenden Bits BRS statt. Es kann aber auch zu einem späteren Zeitpunkt umgeschaltet werden, beispielsweise an einem der weiteren eingefügten Bits im Control Field. Sofern in der Nachricht zu einem späteren Zeitpunkt auf kürzere Bitlängen umgeschaltet wird, ist es vorteilhaft, dass die Umschaltung auf das erfindungsgemäße Prüfungsverfahren spätestens mit der Umschaltung auf kürzere Bitlängen durchgeführt wird. Die Rückumschaltung erfolgt in diesem Fall frühestens nach dem Wechsel auf die langen Bitlängen, kann aber auch erst nach Abschluss der Übertragung der Nachricht erfolgen.

Die Flanke von rezessiv nach dominant kann außerdem zur Verbesserung der Synchronisierung zwischen den Busteilnehmern herangezogen werden, was insbesondere bei einer Umschaltung auf kürzere Bitlängen von Vorteil ist.

Bei dem CAN Übertragungsverfahren nach der Norm darf das Datenfeld maximal 8 Byte, also 64 Bit an Daten enthalten. Der Data Length Code umfasst gemäß der Norm vier Bits, kann also 16 verschiedene Werte annehmen. Benutzt werden aus diesem Wertebereich lediglich acht verschiedene Werte für die unterschiedlichen Größen des Datenfeldes von 1 Byte bis zu 8 Byte. Ein Datenfeld von 0 Byte ist im Norm CAN nicht empfohlen, Größen oberhalb von 8 Byte sind nicht zulässig.

Anders als im Norm CAN werden bei den in Figur 1b dargestellten Nachrichten weitere Werte, die der Data Length Code einnehmen kann, ausgenutzt, um größere Datenfelder zu kennzeichnen. Beispielsweise können für die Werte des Data Length Code größer 0b1000 und bis 0b1111 die zugehörigen Größen des Datenfeldes um ein größeres Inkrement als ein Byte anwachsen, beispielsweise zwei, drei oder vier Byte, oder um unregelmäßige Werte. Die Zuordnung dieser Werte des Data Length Code zu Größen des Datenfeldes kann im wesentlichen frei festgelegt werden. Die Nachrichten tragen die Bezeichnung "CAN FD Long".

Wird wie beschrieben das Datenfeld von Nachrichten vergrößert, so kann es sinnvoll sein, auch das verwendete Verfahren zum Cyclic Redundancy Check (CRC) anzupassen, um eine ausreichende Fehlersicherheit zu erhalten. Insbesondere kann es vorteilhaft sein, ein anderes CRC-Polynom, beispielsweise mit höherer Ordnung, zu verwenden und entsprechend eine CRC Field abweichender Größe in den erfindungsgemäß modifizierten Nachrichten vorzusehen. Dies ist in Figur 1b dadurch dargestellt, dass das CRC Field der erfindungsgemäßen Nachrichten im dargestellten Beispiel eine Länge von L Bit aufweist, wobei L abweichend vom Norm CAN ungleich, insbesondere größer als 15 sein kann.

In einer vorteilhaften Ausführungsform wird der Kommunikationscontroller so ausgelegt, dass er Kompatibilität zum Norm CAN aufweist, also in einem Norm CAN Bussystem normgemäß arbeitet, während er in einem erfindungsgemäß modifizierten Bussystem das erfindungsgemäße Prüfungsverfahren anwendet, größere Datenfelder in den Nachrichten zulässt und auch eine daran angepasste Berechnung und Prüfung des CRC-Code durchführt.

Da am Anfang des Empfanges einer Nachricht noch nicht feststeht, ob eine Norm-konforme CAN-Nachricht oder eine erfindungsgemäß modifizierte Nachricht empfangen wird, werden in einem erfindungsgemäßen Kommunikationscontroller mehrere CRC-Schieberegister implementiert, die parallel arbeiten. Nach dem Empfang des CRC Delimiter, wenn der CRC-Code im Empfänger ausgewertet wird, steht aufgrund der erfindungsgemäßen weiteren Kennzeichnung fest, welches Übertragungsverfahren angewendet wurde, und es wird dann das diesem Übertragungsverfahren zugeordnete Schieberegister ausgewertet. Die weitere Kennzeichnung kann, wie früher bereits dargestellt, mit der ersten Kennzeichnung, die die Größe des Datenfeldes und die Interpretation des Data Length Code betrifft, übereinstimmen.

Am Anfang des Sendens einer Nachricht steht zwar für den Sender bereits fest, nach welchem Übertragungsverfahren gesendet werden soll. Da es jedoch vorkommen kann, dass die Arbitration um den Buszugriff verloren wird und die begonnene Nachricht nicht gesendet, sondern stattdessen eine andere Nachricht empfangen wird, werden auch hier mehrere CRC-Schieberegister parallel angesteuert.

Figur 1c zeigt zwei weitere Beispiele für erfindungsgemäß modifizierte Nachrichten, bei welchen gegenüber Figur 1b zusätzlich Bereiche innerhalb der Nachricht festgelegt sind, in welchen erfindungsgemäß eine unterschiedliche Bitlänge verwendet wird und somit die einzelnen Bits schneller über den Bus übertragen werden. Die Nachrichten tragen die Bezeichnung "CAN FD Fast". Für die zwei möglichen Adressierungsvarianten von Nachrichten, das Standard Format und das Extended Format, sind in Figur 1c Bereiche eingezeichnet, in denen zwischen zwei Zuständen, bezeichnet mit Fast-CAN-Arbitration und Fast-CAN-Data umgeschaltet wird. Diese Umschaltung zwischen den beiden Zuständen be-

EP 2 751 956 B1

wirkt, dass für den entsprechenden Teil der Nachricht die Bitlängen verkürzt und somit die einzelnen Bits schneller über den Bus übertragen werden. Dadurch kann die Übertragungszeit für eine Nachricht gegenüber dem normgemäßen Verfahren verkürzt werden. Der zugehörige Wechsel der zeitlichen Bitlänge kann beispielsweise durch Verwendung mindestens zweier unterschiedlicher Skalierungsfaktoren (Prescaler) zur Einstellung der Bus-Zeiteinheit relativ zu einer kleinsten Zeiteinheit oder dem Oszillatortakt im laufenden Betrieb realisiert werden. Die Umschaltung der Bitlänge, sowie die entsprechende Veränderung des Skalierungsfaktors sind in Figur 1c ebenfalls beispielhaft dargestellt.

Der Übergang zwischen den Zuständen Fast-CAN-Arbitration und Fast-CAN-Data erfolgt in Nachrichten, welche die erste Kennzeichnung EDL aufweisen, abhängig von einer zweiten Kennzeichnung, die den Teilnehmern der Datenübertragung signalisiert, dass die verkürzte Bitlänge angewendet wird. Die zweite Kennzeichnung erfolgt zeitlich nach der ersten Kennzeichnung innerhalb der Nachricht. In dem hier dargestellten Ausführungsbeispiel ist die Position dieser Kennzeichnung ein zusätzliches Bit im Control Field, das mit BRS (Bit Rate Switch) bezeichnet ist. Es wird im gezeigten Beispiel als viertes Bit des Control Field übertragen.

Wenn wie geschildert innerhalb der Nachricht auf kürzere Bitlängen umgeschaltet wird, ist es vorteilhaft, dass die Umschaltung auf das erfindungsgemäße Prüfungsverfahren spätestens mit der Umschaltung auf kürzere Bitlängen durchgeführt wird. In einer bevorzugten Ausführungsform des Verfahrens erfolgt gleichzeitig mit dem Senden der zweiten Kennzeichnung BRS die Umschaltung auf das erfindungsgemäße Prüfungsverfahren.

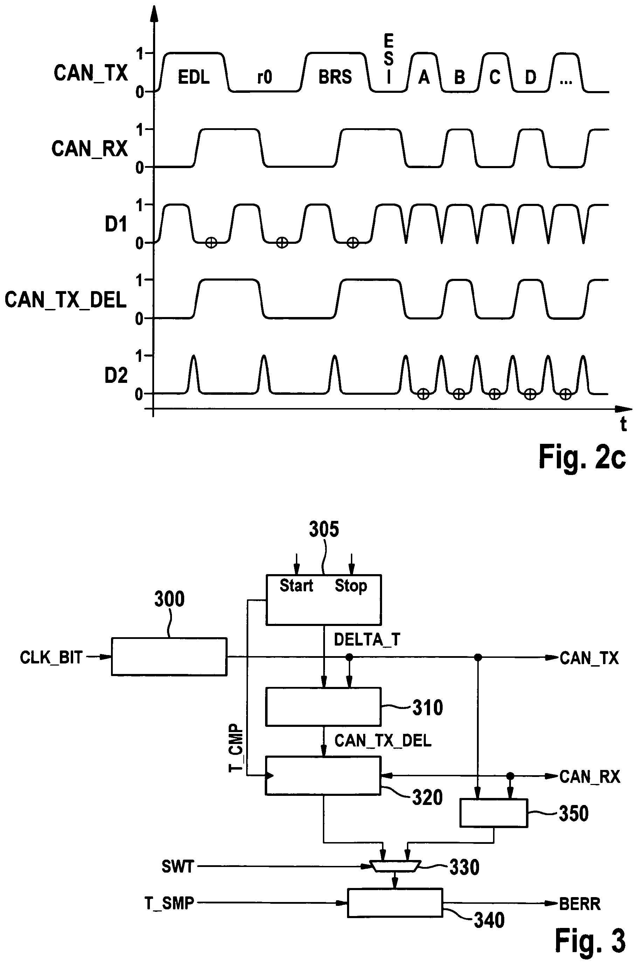

Dies ist in Figur 2c schematisch dargestellt. Das Sendesignal CAN_TX umfasst im dargestellten Abschnitt die Bitfolge EDL, r0, BRS, ESI, A, B, C, D. Die Bits A, B, C, D können hierbei die vier Bits des Data Length Code oder auch weitere, zusätzlich eingefügte Bits des Control Field sein. Das Empfangssignal CAN_RX ist um die Zeitverzögerung DELTA_T verzögert, welche anhand der Flanke zwischen EDL und r0 ermittelt werden kann, wie in Zusammenhang mit Figur 2b dargestellt wurde. Das XOR-verknüpfte Signal D1 wird am Sample-Punkt - durch Kreuze gekennzeichnet - ausgewertet, um die erfolgreiche Übertragung zu prüfen. Am Sample-Punkt des BRS-Bit wird auf eine kürzere Bitlänge umgeschaltet. Da die kürzere Bitlänge im dargestellten Fall eine zur Zeitverzögerung DELTA_T vergleichbare Länge hat, liefert das Signal D1 nun fast durchgehend ein "1"-Signal, welches Nichtübereinstimmung zwischen Sende- und Empfangssignal entspricht. Die Prüfung der korrekten Übertragung ist anhand des Signales D1 nicht mehr möglich.

Das um die Verzögerungszeit T_DELAY verzögerte Sendesignal CAN_TX_DEL ist in Figur 2c ebenfalls dargestellt. Aus der ermittelten Zeitverzögerung DELTA_T wird ein Wert für die Verzögerungszeit T_DELAY generiert oder es wird der zuvor vorliegende Wert mittels des Ergebnisses der Messung aktualisiert. Es kann aber auch ein vorgegebener Wert zur Anwendung kommen. Die XOR-Verknüpfung aus verzögertem Sendesignal CAN_TX_DEL und Empfangssignal CAN_RX, in Figur 2c dargestellt als Signal D2, liefert ein Vergleichssignal, das über einen ausreichenden Zeitraum einen Wert "0", also Übereinstimmung zwischen Sende- und Empfangssignal signalisiert. Bei geeigneter Wahl des Vergleichszeitpunktes - wieder durch Kreuze gekennzeichnet - ist eine robuste Prüfung der Datenübertragung möglich.

Auf diese Weise kann sichergestellt werden, dass für die kürzeren Bitlängen die intrinsische Zeitverzögerung der Busanschlusseinheit das Ergebnis des Vergleiches nicht negativ beeinflusst. Die Rückumschaltung auf das normgemäße Prüfungs- und Übertragungsverfahren erfolgt in dieser Ausführungsform unmittelbar nach Erreichen des für die Rückumschaltung festgelegten Bits, beispielsweise des CRC Delimiter Bits, oder dann, wenn ein Grund zum Start eines Error-Frames erkannt wurde.

Grundsätzlich zerfällt gemäß der Norm die Dauer eines Bits oder Bitlänge in die nicht überlappenden Segmente:

- SYNCHRONIZATION SEGMENT (SYNC_SEG)
- PROPAGATION TIME SEGMENT (PROP_SEG)
- PHASE BUFFER SEGMENT1 (PHASE_SEG1)
- PHASE BUFFER SEGMENT2 (PHASE_SEG2),

welche folgende Funktion besitzen:

Das Segment SYNC_SEG dient zur Synchronisierung der verschiedenen Busteilnehmer. Flanken des Bussignals werden in diesem Segment erwartet.
Das Segment PROP_SEG dient der Kompensation physikalischer Verzögerungszeiten innerhalb des Netzwerkes.
Die Segmente PHASE_SEG1 und PHASE SEG2 dienen der Kompensation von Abweichungen in der Lage der Signalflanken. Sie werden im Rahmen der Resynchronisierung dynamisch angepasst. Der Sample-Punkt liegt am Ende von PHASE_SEG1.

Im erfindungsgemäßen Verfahren werden die Längen der einzelnen Segmente für die Bereiche unterschiedlicher Bitlängen mehrfach, im dargestellten Beispiel zweifach vorgehalten und werden beispielsweise in zwei Konfigurationsregister abgelegt. Insbesondere die Position des Sample-Punktes kann so je nach Bitlänge unterschiedlich konfiguriert werden. Außerdem kann in der Konfiguration, die im Bereich kürzerer Bitlängen verwendet wird, das Propagation-Segment minimiert oder auf Länge Null konfiguriert werden, um die Bitlänge zu verkürzen.

In Figur 3 ist ein Blockschaltbild der relevanten Bestandteile einer Schaltung, welche in einer erfindungsgemäßen Vorrichtung des Verfahren ausführt, dargestellt. Sie umfasst ein Sende-Schieberegister 300, einen Verzögerungszähler 305, eine Verzögerungseinheit 310, eine Vergleichseinheit 320, eine Umschalteinheit 330, eine Auswerteeinheit 340, sowie einen Normvergleicher 350. Selbstverständlich können auch einzelne dieser Bestandteile kombiniert beziehungsweise integriert ausgeführt werden.

Aus dem Sende-Schieberegister 300, welches über eine Verbindung mit dem Bit-Takt CLK_BIT angesteuert wird, wird mit jedem Bit-Takt, also einmal je Bitlänge, ein Bit des zu übertragenden seriellen Datenstromes als Sendesignal CAN_TX über die entsprechende Verbindungsleitung an die Busanschlusseinheit ausgegeben. Das Empfangssignal CAN_RX, welches über eine Verbindungsleitung von der Busanschlusseinheit erhalten wird, liegt an der Vergleichseinheit 320 und dem Normvergleicher 350 an. Durch Auswertung geeigneter Flanken wie z.B. der Flanke zwischen EDL und r0 des Sendesignales CAN_TX und des Empfangssignales CAN_RX werden in der Vorrichtung ein Start- und ein Stop-Signal für den Verzögerungszähler 305 erzeugt, welcher daraus beispielsweise durch Zählen von Ostillatorzyklen eines vorhandenen Oszillators eine Zeitverzögerung DELTA_T ermittelt. Weiterhin generiert der Verzögerungszähler einen Vergleichspunkt T_CMP in Abhängigkeit von der gemessenen Zeitverzögerung. Beispielsweise kann dieser Vergleichspunkt als Summe aus der ermittelten Zeitverzögerung DELTA_T und einem vorgegebenen oder vorgebbaren Prozentsatz der Bitlänge, insbesondere der halben Bitlänge, generiert werden. Der Vergleichspunkt definiert, zu welchem Zeitpunkt die XOR-Verknüpfung zwischen dem verzögerten Sendesignal CAN_TX_DEL und dem Empfangssignal CAN_RX in der Vergleichseinheit 320 ausgewertet wird.

Die Verzögerungseinheit 310 generiert aus dem Sendesignal CAN_TX und der ihr vom Verzögerungszähler 305 übermittelten Zeitverzögerung DELTA_T ein um eine Verzögerungszeit T_DELAY verzögertes Sendesignal CAN_TX_DEL. In einer besonders einfachen Implementierung kann die Verzögerungszeit T_DELAY ein ganzzahliges Vielfaches der (kurzen) Bitlänge sein, so dass die Verzögerungseinheit die Bitfolge lediglich um ein oder mehrere Bits versetzt. Dies ist besonders einfach durch geeignete Hardware-Register umzusetzen. Die Vergleichseinheit 320 erhält das Empfangssignal CAN_RX und das verzögerte Sendesignal CAN_TX_DEL. Weiterhin erhält die Vergleichseinheit 320 vom Verzögerungszähler 305 eine Information T_CMP über einen geeigneten Vergleichspunkt, zu dem das Vergleichsergebnis zwischen dem Empfangssignal CAN_RX und dem verzögerten Sendesignal CAN_TX_DEL abzutasten ist. Die Vergleichseinheit 320 erzeugt damit ein Ausgangssignal, das das Ergebnis des Vergleiches wiedergibt und an die Umschalteinheit 330, beispielsweise einen Multiplexer weitergeleitet wird. Parallel erzeugt der Normvergleicher 350, der beispielsweise als XOR-Gatter ausgebildet sein kann, ein zweites Ausgangssignal, das das Ergebnis des Vergleiches zwischen CAN_TX und CAN_RX wiedergibt und ebenfalls an die Umschalteinheit 330 weitergeleitet wird. Die Vorrichtung schaltet beispielsweise durch ein geeignetes Signal SWT und / oder basierend auf getroffenen Vorgaben, die etwa das Erreichen oder die Auswertung eines vorgegebenen oder vorgebbaren Bits umfassen können, die Umschalteinheit 330 zwischen den beiden Signalen um, so dass entweder das Ausgangssignal des Normvergleichers 350 oder der Vergleichseinheit an der Auswerteeinheit 340 anliegt. Beispielsweise schaltet die Vorrichtung die Umschalteinheit nach dem BRS-Bit um, sofern eine Umschaltung auf kürzere Bitlängen vorliegt. In diesem Fall liegen an der Auswerteeinheit 340 die Werte von D1 beziehungsweise D2 an den jeweils in Figur 2c eingetragenen Kreuzen an. In der Auswerte-Einheit wird dann am konfigurierten Sample-Punkt T_SMP das jeweils durch die Umschalteinheit durchgeschaltete Signal abgetastet und gegebenenfalls ein Bit-Error-Signal BERR erzeugt, falls keine Übereinstimmung detektiert wurde. Wie man erkennen kann, ist durch die Vorrichtung in der dargestellten Ausführung eine zuverlässige Prüfung der korrekten Datenübertragung auch bei den kurzen Bitlängen möglich.

Das vorgestellte Übertragungsverfahren eignet sich im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist. Weiterhin ist es auch möglich, das Verfahren in der industriellen Automatisierung einzusetzen, also beispielsweise zur Übertragung von Steuerinformation zwischen verteilten, durch den Bus miteinander verbundenen Steuereinheiten, die den Ablauf eines industriellen Fertigungsablaufes steuern. In diesem Umfeld können auch sehr lange Busleitungen auftreten und es kann besonders sinnvoll sein, das Bussystem für die Arbitierungsphase mit einer relativ langen Bitlänge zu betreiben, beispielsweise mit 16, 32 oder 64 Mikrosekunden, so dass die Bussignale sich während des Arbitierungsvorganges wie erforderlich auf dem gesamten Bussystem ausbreiten können. Anschließend kann dann für einen Teil der Nachricht, wie beschrieben, auf kürzere Bitlängen umgeschalten werden, um die mittlere Übertragungsrate nicht zu klein werden zu lassen.

Insgesamt stellt das Verfahren ein Übertragungsverfahren dar, welches sich dadurch auszeichnet, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Durch Verwendung der erweiterten Größe des Datenfeldes und der verkürzten Bitlänge kann die Geschwindigkeit der Datenübertragung deutlich gesteigert werden. Es können weite Teile des CAN-Conformance-Tests (ISO 16845) übernommen werden. Es ist auch möglich, das erfindungsgemäße Übertragungsverfahren mit den Ergänzungen des TTCAN (ISO 11898-4) zu kombinieren.

**Patentansprüche**

1. Verfahren zur Prüfung der korrekten Funktion einer seriellen Datenübertragung in einem Bussystem mit mindestens zwei Busteilnehmern, wobei die Busteilnehmer über eine Busanschlusseinheit an den Bus angeschlossen sind und über den Bus Nachrichten austauschen,
wobei der Sendezugriff auf den Bus für jede Nachricht durch das Arbitrierungsverfahren gemäß der CAN-Norm ISO 11898-1 an einen Busteilnehmer vergeben wird, welcher für diese Nachricht zum Sender wird, wobei die Nachrichten einen logischen Aufbau gemäß der CAN-Norm aufweisen,
also aus Start-of-Frame-Bit, Arbitration Field, Control Field, Data Field, CRC Field, Acknowledge Field und End-of-Frame-Field aufgebaut sind,
wobei durch einen Vergleich eines an die Busanschlusseinheit gesendeten Sendesignales (CAN_TX) mit einem von der Busanschlusseinheit empfangenen Empfangssignal (CAN_RX) eine korrekte Funktion der Datenübertragung während der Übertragung geprüft wird,
**dadurch gekennzeichnet, dass** im Sender ein gegenüber dem Sendesignal (CAN_TX) um eine Verzögerungszeit (T_DELAY) verzögertes Sendesignal (CAN_TX_DEL) erzeugt wird,
wobei abhängig von einer Umschaltung für die Prüfung der korrekten Funktion der Datenübertragung die Übereinstimmung zwischen dem unverzögerten Sendesignal (CAN_TX) und dem Empfangssignal (CAN_RX) geprüft wird oder die Übereinstimmung zwischen dem verzögerten Sendesignal (CAN_TX_DEL) und dem Empfangssignal (CAN_RX) geprüft wird.

2. Verfahren nach Anspruch 1, wobei die Verzögerungszeit (T_DELAY) vorgegeben oder vorgebbar ist.

3. Verfahren nach einem der Ansprüche 1 bis 2, wobei die Verzögerungszeit (T_DELAY) von einer Ermittlung einer Zeitverzögerung oder gemittelten Zeitverzögerung (DELTA_T, DELTA_T_MEAN) abhängig ist.

4. Verfahren nach einem der Ansprüche 1 bis 3, wobei durch die Umschaltung innerhalb des Sendevorgangs derselben Nachricht zwischen einer Verwendung des unverzögerten Sendesignals (CAN_TX) und einer Verwendung des verzögerten Sendesignals (CAN_TX_DEL) umgeschaltet wird.

5. Verfahren nach einem der Ansprüche 3 bis 4, wobei die gemittelten Zeitverzögerung (DELTA_T_MEAN) durch Mittelwertbildung aus mehreren nacheinander ermittelten Messwerten (DELTA_T_1, ..., DELTA_T_N) der Zeitverzögerung DELTA_T aus mehreren aufeinander folgend gesendeten Nachrichten ermittelt wird.

6. Verfahren nach Anspruch 5, wobei bei einer Bildung der gemittelten Zeitverzögerung (DELTA_T_MEAN) diejenigen Messwerte, die stark vom zuletzt bestimmten Mittelwert abweichen, aussortiert werden.

7. Verfahren nach Anspruch 6, wobei ein Schwellwert für die Differenz oder der Grenzwert für das Verhältnis von einem aktuell vorliegenden Messwert (DELTA_T_1, ..., DELTA_T_N) und dem zuletzt bestimmten Mittelwert DELTA_T_MEAN, ab welchem die Abweichung vom oder das Verhältnis zum Mittelwert als betragsmäßig zu groß eingestuft wird, einstellbar ist.

8. Verfahren nach einem der Ansprüche 3 bis 7, wobei Messwerte (DELTA_T_1, ..., DELTA_T_N) der Zeitverzögerung DELTA_T in einer Liste verwaltet werden, welche bei Systemstart durch ein geeignetes Verfahren initialisiert wird, so dass keine ungültigen Werte in die Bildung des Mittelwertes (DELTA_T_MEAN) eingehen.

9. Verfahren nach einem der Ansprüche 3 bis 8, wobei die Ermittlung der einzelnen Zeitverzögerung (DELTA_T) frühestens nach erfolgter Vergabe des Sendezugriffes an einen Busteilnehmer stattfindet.

10. Verfahren nach einem der Ansprüche 3 bis 9, wobei die Ermittlung der einzelnen Zeitverzögerung (DELTA_T) eine Erkennung von jeweils wenigstens einem Signalwechsel oder einer Signalflanke im Sendesignal (CAN_TX) und im unverzögerten Empfangssignal (CAN_RX) umfasst.

11. Verfahren nach einem der Ansprüche 3 bis 10, wobei abhängig von der ermittelten Zeitverzögerung (DELTA_T, DELTA_T_MEAN) ein Vergleichszeitpunkt (T_CMP) für die Prüfung der korrekten Funktion der Datenübertragung bestimmt wird.

12. Verfahren nach Anspruch 11, wobei der Vergleichszeitpunkt (T_CMP) für die Prüfung der korrekten Funktion der Datenübertragung als Summe aus der ermittelten Zeitverzögerung (DELTA_T, DELTA_T_MEAN) und einem vorgegebenen oder vorgebbaren Prozentsatz der Bitlänge bestimmt wird.

13. Verfahren nach einem der Ansprüche 1 bis 12, wobei die Umschaltung durch ein Erreichen oder eine Auswertung eines vorgegebenen oder vorgebbaren Bits innerhalb der gerade gesendeten Nachricht oder durch Anlegen eines dafür vorgesehenen Signals (SWT) an eine Umschalteinheit stattfindet.

14. Verfahren nach einem der Ansprüche 1 bis 13, wobei die Nachrichten, in welchen die Umschaltung stattfindet, durch eine geeignete Kennzeichnung (EDL) gekennzeichnet sind.

15. Verfahren nach Anspruch 14, wobei bei Vorliegen einer ersten Kennzeichnung (EDL) das Control Field der Nachrichten abweichend von der CAN-Norm mehr als sechs Bit umfasst.

16. Verfahren nach einem der Ansprüche 14 bis 15, wobei die erste Kennzeichnung (EDL) für Nachrichten mit Standard Adressierung durch ein rezessives zweites Bit im Control Field und für Nachrichten mit Extended Adressierung durch ein rezessives erstes und / oder zweites Bit im Control Field erfolgt.

17. Verfahren nach Anspruch 16, wobei bei Vorliegen der ersten Kennzeichnung auf das rezessive Bit der ersten Kennzeichnung (EDL) in allen Daten-Nachrichten wenigstens ein dominantes Bit folgt.

18. Verfahren nach Anspruch 17, wobei bei Vorliegen der ersten Kennzeichnung (EDL) die Flanke zwischen dem rezessiven Bit der ersten Kennzeichnung (EDL) und dem wenigstens einen folgenden dominanten Bit zur Ermittlung der Zeitverzögerung (DELTA_T, DELTA_T_MEAN) zwischen Sendesignal (CAN_TX) und dem unverzögerten Empfangssignal (CAN_RX) genutzt wird.

19. Verfahren nach einem der Ansprüche 1 bis 18, wobei bei Vorliegen der ersten Kennzeichnung (EDL) das Datenfeld der Nachrichten abweichend von der CAN-Norm ISO 11898-1 mehr als acht Bytes umfassen kann, wobei zur Feststellung der Größe des Datenfeldes die Werte der vier Bits des Data Length Codes zumindest teilweise abweichend von der CAN-Norm ISO 11898-1 interpretiert werden.

20. Verfahren nach einem der Ansprüche 1 bis 19, wobei bei Vorliegen einer zweiten Kennzeichnung (BRS) die Bitlänge für wenigstens einen vorgegebenen oder vorgebbaren Bereich innerhalb der Nachricht einen gegenüber der vor dem Vorliegen der zweiten Kennzeichnung verwendeten Bitlänge verkürzten Wert annimmt, wobei der Bereich frühestens mit der zweiten Kennzeichnung beginnt und spätestens mit dem CRC Delimiter endet, wobei eine zweite Kennzeichnung (BRS) nur bei Vorliegen der ersten Kennzeichnung (EDL) auftritt und in dem abweichend von der CAN-Norm ISO 11898-1 mehr als sechs Bit umfassenden Control Field der Nachrichten erfolgt.

21. Verfahren nach Anspruch 20, wobei die zweite Kennzeichnung (BRS) durch ein rezessives Bit im Control Field erfolgt, welches zeitlich nach dem Bit der ersten Kennzeichnung (EDL) übertragen wird.

22. Verfahren nach Anspruch 21, wobei bei Vorliegen der zweiten Kennzeichnung das rezessive Bit der zweiten Kennzeichnung (BRS) vom rezessiven Bit der ersten Kennzeichnung (EDL) durch wenigstens ein dominantes Bit getrennt ist.

23. Verfahren nach einem der Ansprüche 19 bis 22, wobei bei Vorliegen der zweiten Kennzeichnung (BRS) in den Bereichen längerer und kürzerer Bitlänge unterschiedliche Werte für eine Bit-Timing-Parameter verwendet werden können.

24. Verfahren nach einem der Ansprüche 19 bis 23, wobei die unterschiedlichen Werte der Bitlänge innerhalb der Nachricht durch Verwendung unterschiedlicher Skalierungsfaktoren (Prescaler) zur Einstellung der Bus-Zeiteinheit relativ zu einer kleinsten Zeiteinheit oder dem Oszillatortakt im laufenden Betrieb realisiert werden.

25. Verwendung des Verfahrens nach einem der Ansprüche 1 bis 24 im normalen Betrieb eines Kraftfahrzeuges zur Übertragung von Daten zwischen wenigstens zwei Steuergeräten des Kraftfahrzeuges, welche über einen geeigneten Datenbus verbunden sind.

26. Verwendung des Verfahrens nach einem der Ansprüche 1 bis 24 im Betrieb industrieller Steuerungsanlagen zur Übertragung von Daten zwischen wenigstens zwei Steuereinheiten, welche über einen geeigneten Datenbus verbunden sind.

27. Verwendung des Verfahrens nach einem der Ansprüche 1 bis 24 während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist.

28. Vorrichtung zur geprüften seriellen Datenübertragung in einem Bussystem mit mindestens zwei Busteilnehmern, wobei die Busteilnehmer über eine Busanschlusseinheit an den Bus angeschlossen sind und über den Bus Nachrichten austauschen, wobei der Sendezugriff auf den Bus für jede Nachricht durch das Arbitrierungsverfahren gemäß der CAN-Norm ISO 11898-1 an einen Busteilnehmer vergeben wird, welcher für diese Nachricht zum Sender wird, wobei die Nachrichten einen logischen Aufbau gemäß der CAN-Norm aufweisen, also aus Start-of-Frame-Bit, Arbitration Field, Control Field, Data Field, CRC Field, Acknowledge Field und End-of-Frame-Field aufgebaut sind, wobei die Vorrichtung Mittel umfasst, die dazu eingerichtet sind, durch einen Vergleich eines an die Busanschlusseinheit gesendeten Sendesignales (CAN_TX) mit einem von der Busanschlusseinheit empfangenen Empfangssignal (CAN_RX) eine korrekte Funktion der Datenübertragung während der Übertragung zu prüfen, **dadurch gekennzeichnet, dass** die Vorrichtung eine geeignete Verzögerungseinheit (310) umfasst, die dazu eingerichtet ist, ein gegenüber dem Sendesignal (CAN_TX) um eine Verzögerungszeit (T_DELAY) verzögertes Sendesignal (CAN_TX_DEL) zu erzeugen, und dass die Vorrichtung eine Umschalteinheit (330) umfasst, mittels der abhängig von einer Umschaltung für die Prüfung der korrekten Funktion der Datenübertragung die Übereinstimmung zwischen dem unverzögerten Sendesignal (CAN_TX) und dem Empfangssignal (CAN_RX) geprüft wird oder die Übereinstimmung zwischen dem verzögerten Sendesignal (CAN_TX_DEL) und dem Empfangssignal (CAN_RX) geprüft wird.

29. Vorrichtung nach Anspruch 28, wobei die Vorrichtung eine Vergleichseinheit (320) umfasst, welche eine Verknüpfung des um eine Verzögerungszeit (T_DELAY) verzögerten Sendesignals (CAN_TX_DEL) mit dem Empfangssignal (CAN_RX) durchführt und zu einem Vergleichszeitpunkt (T_CMP) auswertet.

30. Vorrichtung nach einem der Ansprüche 28 bis 29, wobei die Umschalteinheit (330) durch ein Erreichen oder eine Auswertung eines vorgegebenen oder vorgebbaren Bits innerhalb der gerade gesendeten Nachricht und / oder durch Anlegen eines dafür vorgesehenen Signals (SWT) umschaltbar ausgeführt ist.

31. Vorrichtung nach einem der Ansprüche 28 bis 30 wobei die Vorrichtung ein Verzögerungszähler (305) umfasst, welcher eine Zeitverzögerung (DELTA_T) zwischen Sendesignal (CAN_TX) und Empfangssignal (CAN_RX) ermittelt und in Abhängigkeit vom Ergebnis einen Wert für die Zeitverzögerung (T_DELAY) bereitstellt.

32. Vorrichtung nach einem der Ansprüche 28 bis 31, wobei die Vorrichtung einen Speicherbereich für N Einträge von Messwerten der Zeitverzögerung (DELTA_T_1, ..., bis DELTA_T_N) und ein geeignetes Steuerwerk zur Ausführung einer Mittelwertbildung (DELTA_T_MEAN) aus Einträgen des Speicherbereiches umfasst.

33. Vorrichtung nach einem der Ansprüche 28 bis 32, wobei die Vorrichtung durch geeignete Mittel dafür eingerichtet ist, zumindest eines der Verfahren gemäß Anspruch 2 bis 24 auszuführen.

**Claims**

1. Method for checking the correct operation of a serial data transmission in a bus system having at least two bus subscribers, wherein the bus subscribers are connected to the bus via a bus access unit and use the bus to interchange messages, transmission access to the bus for each message being allocated to a bus subscriber, which becomes the sender for this message, by the arbitration method according to CAN standard ISO 11898-1, the messages having a logical structure according to the CAN standard, that is to say being constructed from a start-of-frame bit, arbitration field, control field, data field, CRC field, acknowledge field and end-of-frame field, wherein a comparison of a transmission signal (CAN_TX) sent to the bus access unit with a received signal (CAN_RX) received by the bus access unit is used to check correct operation of the data transmission during the transmission, **characterized in that** a transmission signal (CAN_TX_DEL) delayed relative to the transmission signal (CAN_TX) by a delay time (T_DELAY) is produced in the transmitter, wherein a changeover for the check on the correct operation of the data transmission is taken as a basis for checking the match between the undelayed transmission signal (CAN_TX) and the received signal (CAN_RX) or for checking the match between the delayed transmission signal (CAN_TX_DEL) and the received signal (CAN_RX).

2. Method according to Claim 1, wherein the delay time (T_DELAY) is prescribed or prescribable.

3. Method according to either of Claims 1 and 2, wherein the delay time (T_DELAY) is dependent on an ascertainment of a time delay or averaged time delay (DELTA_T, DELTA_T_MEAN).

4. Method according to one of Claims 1 to 3,
wherein the changeover changes over, within the transmission process for the same message, between a use of the undelayed transmission signal (CAN_TX) and a use of the delayed transmission signal (CAN_TX_DEL).

5. Method according to either of Claims 3 and 4, wherein the averaged time delay (DELTA_T_MEAN) is ascertained by mean value formation from multiple successively ascertained measured values (DELTA_T_1, ..., DELTA_T_N) of the time delay DELTA_T from multiple successively transmitted messages.

6. Method according to Claim 5,
wherein during formation of the averaged time delay (DELTA_T_MEAN), those measured values that differ greatly from the most recently determined mean value are eliminated.

7. Method according to Claim 6,
wherein a threshold value for the difference or the limit value for the ratio of a currently available measured value (DELTA_T_1, ..., DELTA_T_N) and the most recently determined mean value DELTA_T_MEAN, from which the discrepancy from or the ratio to the mean value is classified as too great in terms of absolute value, is adjustable.

8. Method according to one of Claims 3 to 7,
wherein measured values (DELTA_T_1, ..., DELTA_T_N) of the time delay DELTA_T are managed in a list that is initialized by a suitable method when the system starts, so that no invalid values are used in the formation of the mean value (DELTA_T_MEAN).

9. Method according to one of Claims 3 to 8,
wherein the ascertainment of the individual time delay (DELTA_T) takes place no earlier than after the transmission access has been allocated to a bus subscriber.

10. Method according to one of Claims 3 to 9,
wherein the ascertainment of the individual time delay (DELTA_T) comprises identification of at least one signal change or of a signal edge in the transmission signal (CAN_TX) and in the undelayed received signal (CAN_RX), respectively.

11. Method according to one of Claims 3 to 10,
wherein the ascertained time delay (DELTA_T, DELTA_T_MEAN) is taken as a basis for determining a comparison time (T_CMP) for the check on the correct operation of the data transmission.

12. Method according to Claim 11,
wherein the comparison time (T_CMP) for the check on the correct operation of the data transmission is determined as the sum of the ascertained time delay (DELTA_T, DELTA_T_MEAN) and a prescribed or prescribable percentage of the bit length.

13. Method according to one of Claims 1 to 12,
wherein the changeover takes place by virtue of arrival at or evaluation of a prescribed or prescribable bit within the currently sent message or by virtue of application of a signal (SWT) provided therefor to a changeover unit.

14. Method according to one of Claims 1 to 13,
wherein the messages in which the changeover takes place are denoted by a suitable identifier (EDL).

15. Method according to Claim 14,

wherein when a first identifier (EDL) is available, the control field of the messages comprises, in a departure from the CAN standard, more than 6 bits.

16. Method according to either of Claims 14 and 15, wherein the first identifier (EDL) is provided for messages with standard addressing by a recessive second bit in the control field and for messages with extended addressing by a recessive first and/or second bit in the control field.

17. Method according to Claim 16,
wherein when the first identifier is available, the recessive bit of the first identifier (EDL) is followed by at least one dominant bit in all data messages.

18. Method according to Claim 17,
wherein when the first identifier (EDL) is available, the edge between the recessive bit of the first identifier (EDL) and the at least one following dominant bit is used for ascertaining the time delay (DELTA_T, DELTA_T_MEAN) between the transmission signal (CAN_TX) and the undelayed received signal (CAN_RX).

19. Method according to one of Claims 1 to 18,
wherein when the first identifier (EDL) is available, the data field of the messages can comprise, in a departure from CAN standard ISO 11898-1, more than 8 bytes,
the size of the data field being established by interpreting the values of the 4 bits of the data length code at least to some extent in a departure from CAN standard ISO 11898-1.

20. Method according to one of Claims 1 to 19,
wherein when a second identifier (BRS) is available, the bit length for at least one prescribed or prescribable range within the message assumes a shortened value relative to the bit length used before the second identifier is available, the range beginning no earlier than with the second identifier and ending no later than with the CRC delimiter, wherein a second identifier (BRS) arises only when the first identifier (EDL) is available, and is provided in the control field of the messages that comprises, in a departure from CAN standard ISO 11898-1, more than 6 bits.

21. Method according to Claim 20,
wherein the second identifier (BRS) is provided by a recessive bit in the control field that is transmitted at a time after the bit of the first identifier (EDL).

22. Method according to Claim 21,
wherein when the second identifier is available, the recessive bit of the second identifier (BRS) is separated from the recessive bit of the first identifier (EDL) by at least one dominant bit.

23. Method according to one of Claims 19 to 22, wherein when the second identifier (BRS) is available, different values for a bit timing parameter can be used in the ranges of longer and shorter bit length.

24. Method according to one of Claims 19 to 23, wherein the different values of the bit length are realized within the message by using different scaling factors (prescalers) for setting the bus time unit relative to a smallest time unit or the oscillator clock in the course of operation.

25. Use of the method according to one of Claims 1 to 24 during normal operation of a motor vehicle for transmitting data between at least two controllers of the motor vehicle that are connected via a suitable data bus.

26. Use of the method according to one of Claims 1 to 24 during operation of industrial control installations for transmitting data between at least two control units that are connected via a suitable data bus.

27. Use of the method according to one of Claims 1 to 24 during production or servicing of a motor vehicle for transmitting data between a programming unit, which is connected to a suitable data bus for the purpose of programming, and at least one controller of the motor vehicle, which is connected to the data bus.

28. Apparatus for checked serial data transmission in a bus system having at least two bus subscribers, wherein the bus subscribers are connected to the bus via a bus access unit and use the bus to interchange messages, transmission access to the bus for each message being allocated to a bus subscriber, which becomes the sender for this message, by the arbitration method according to CAN standard ISO 11898-1, the messages having a logical structure according to the CAN standard, that is to say being constructed from a start-of-frame bit, arbitration field, control field, data field, CRC field, acknowledge field and end-of-frame field,

wherein the apparatus comprises means that are set up to use a comparison of a transmission signal (CAN_TX) sent to the bus access unit with a received signal (CAN_RX) received by the bus access unit to check correct operation of the data transmission during the transmission,

**characterized in that** the apparatus comprises a suitable delay unit (310) that is set up to produce a transmission signal (CAN_TX_DEL) delayed relative to the transmission signal (CAN_TX) by a delay time (T_DELAY),

and **in that** the apparatus comprises a changeover unit (330) that is used to take a changeover for the check on the correct operation of the data transmission as a basis for checking the match between the undelayed transmission signal (CAN_TX) and the received signal (CAN_RX) or for checking the match between the delayed transmission signal (CAN_TX_DEL) and the received signal (CAN_RX).

29. Apparatus according to Claim 28,
wherein the apparatus comprises a comparison unit (320) that performs a logic function for the transmission signal (CAN_TX_DEL) delayed by a delay time (T_DELAY) and the received signal (CAN_RX) and evaluates said logic function at a comparison time (T_CMP).

30. Apparatus according to either of Claims 28 and 29, wherein the changeover unit (330) is designed to be able to be changed over by virtue of arrival at or evaluation of a prescribed or prescribable bit within the currently sent message and/or by virtue of application of a signal (SWT) provided therefor.

31. Apparatus according to one of Claims 28 to 30, wherein the apparatus comprises a delay counter (305) that ascertains a time delay (DELTA_T) between transmission signal (CAN_TX) and received signal (CAN_RX) and takes the result as a basis for providing a value for the time delay (T_DELAY).

32. Apparatus according to one of Claims 28 to 31, wherein the apparatus comprises a memory area for N entries of measured values of the time delay (DELTA_T_1, ..., to DELTA_T_N) and a suitable control mechanism for carrying out mean value formation (DELTA_T_MEAN) from entries in the memory area.

33. Apparatus according to one of Claims 28 to 32, wherein the apparatus is set up, by suitable means, to carry out at least one of the methods according to Claims 2 to 24.

**Revendications**

1. Procédé de contrôle du bon fonctionnement d'une transmission de données en série dans un système de bus comportant au moins deux périphériques de bus, les périphériques de bus étant raccordés au bus par le biais d'une unité de raccordement de bus et échangeant des messages par le biais du bus, l'accès en émission au bus pour chaque message étant attribué par le procédé d'arbitrage selon la norme CAN ISO 11898-1 à un périphérique de bus qui devient émetteur pour ce message, les messages possédant une structure logique selon la norme CAN, c'est-à-dire qu'ils sont constitués d'un bit de début de trame, d'un champ d'arbitrage, d'un champ de commande, d'un champ de données, d'un champ CRC, d'un champ de confirmation de réception et d'un champ de fin de trame, un fonctionnement correct de la transmission de données étant contrôlé pendant la transmission par une comparaison d'un signal d'émission (CAN_TX) envoyé à l'unité de raccordement de bus avec un signal de réception (CAN_RX) reçu par l'unité de raccordement de bus,

**caractérisé en ce qu'**un signal d'émission retardé (CAN_TX_DEL) d'un temps de retard (T_DELAY) par rapport au signal d'émission (CAN_TX) est généré dans l'émetteur,

la concordance entre le signal d'émission non retardé (CAN_TX) et le signal de réception (CAN_RX) étant contrôlée ou la concordance entre le signal d'émission retardé (CAN_TX_DEL) et le signal de réception (CAN_RX) étant contrôlée, suivant une permutation, pour le contrôle du bon fonctionnement de la transmission de données.

2. Procédé selon la revendication 1, le temps de retard (T_DELAY) étant prédéfini ou pouvant être prédéfini.

3. Procédé selon l'une des revendications 1 à 2, le temps de retard (T_DELAY) étant dépendant d'une détermination d'un retard dans le temps ou d'un retard moyen dans le temps (DELTA_T, DELTA_T_MEAN).

4. Procédé selon l'une des revendications 1 à 3, le même message, par la permutation au sein de l'opération d'émission, étant permuté entre une utilisation du signal d'émission non retardé (CAN_TX) et une utilisation du signal d'émission retardé (CAN_TX_DEL).

5. Procédé selon l'une des revendications 3 à 4, le retard moyen dans le temps (DELTA_T_MEAN) étant déterminé par calcul de la valeur moyenne de plusieurs valeurs mesurées (DELTA_T_1, ..., DELTA_T_N) déterminées les unes après les autres du retard dans le temps DELTA_T de plusieurs messages envoyés les uns après les autres.

6. Procédé selon la revendication 5, les valeurs mesurées qui présentent une différence importante par rapport à la dernière valeur moyenne définie étant éliminées par triage lors d'une formation du retard moyen dans le temps (DELTA_T_MEAN).

7. Procédé selon la revendication 6, une valeur de seuil pour la différence ou la valeur limite pour le rapport entre une valeur moyenne actuellement présente (DELTA_T_1, ..., DELTA_T_N) et la dernière valeur moyenne définie (DELTA_T_MEAN), à partir de laquelle la valeur de l'écart ou du rapport par rapport à la valeur moyenne est considérée trop grande, pouvant être réglée.

8. Procédé selon l'une des revendications 3 à 7, les valeurs mesurées (DELTA_T_1, ..., DELTA_T_N) du retard dans le temps (DELTA_T) étant gérées dans une liste qui est initialisée par un procédé approprié lors du démarrage du système, de sorte qu'aucune valeur non valide n'intervient dans la formation de la valeur moyenne (DELTA_T_MEAN).

9. Procédé selon l'une des revendications 3 à 8, la détermination du retard dans le temps (DELTA_T) individuel ayant lieu au plus tôt après l'attribution réussie de l'accès en émission au niveau d'un périphérique de bus.

10. Procédé selon l'une des revendications 3 à 9, la détermination du retard dans le temps (DELTA_T) individuel comprenant une détection respectivement d'au moins un changement de signal ou d'un front de signal dans le signal d'émission (CAN_TX) et dans le signal de réception (CAN_RX) non retardé.

11. Procédé selon l'une des revendications 3 à 10, un instant de comparaison (T_CMP) pour le contrôle du bon fonctionnement de la transmission de données étant défini en fonction du retard dans le temps (DELTA_T, DELTA_T_MEAN) déterminé.

12. Procédé selon la revendication 11, l'instant de comparaison (T_CMP) pour le contrôle du bon fonctionnement de la transmission de données étant défini en tant que somme du retard dans le temps (DELTA_T, DELTA_T_MEAN) déterminé et d'un pourcentage prédéfini ou pouvant être prédéfini de la longueur binaire.

13. Procédé selon l'une des revendications 1 à 12, la permutation ayant lieu par une atteinte ou une interprétation d'un bit prédéfini ou pouvant être prédéfini à l'intérieur du message qui vient d'être envoyé ou par l'application d'un signal (SWT) prévu à cet effet à une unité de permutation.

14. Procédé selon l'une des revendications 1 à 13, les messages dans lesquels a lieu la permutation étant identifiés par un identifiant (EDL) approprié.

15. Procédé selon la revendication 14, le champ de commande des messages, en présence d'un premier identifiant (EDL), à la différence de la norme CAN, comprenant plus de six bits.

16. Procédé selon l'une des revendications 14 à 15, le premier identifiant (EDL) étant effectué, pour les messages avec adressage standard, par un deuxième bit récessif dans le champ de commande et, pour les messages avec adressage étendu, par un premier et/ou deuxième bit récessif dans le champ de commande.

17. Procédé selon la revendication 16, au moins un bit dominant suivant le bit récessif du premier identifiant (EDL) dans tous les messages de données en présence du premier identifiant.

18. Procédé selon la revendication 17, dans lequel, en présence du premier identifiant (EDL), le front entre le bit récessif du premier identifiant (EDL) et l'au moins un bit dominant qui suit étant utilisé pour déterminer le retard dans le temps (DELTA_T, DELTA_T_MEAN) entre le signal d'émission (CAN_TX) et le signal de réception (CAN_RX) non retardé.

19. Procédé selon l'une des revendications 1 à 18, dans lequel, en présence du premier identifiant (EDL), le champ de données des messages, à la différence de la norme CAN ISO 11898-1, peut comprendre plus de huit octets, les valeurs des quatre bits du code de longueur de données étant interprétées au moins partiellement différemment de la norme CAN ISO 11898-1 en vue de fixer la taille du champ de données.

20. Procédé selon l'une des revendications 1 à 19, dans lequel, en présence d'un deuxième identifiant (BRS), la longueur binaire pour au moins une zone prédéfinie ou pouvant être prédéfinie à l'intérieur du message adoptant une valeur raccourcie par rapport à la longueur binaire utilisée avant la présence du deuxième identifiant, la zone débutant au plus tôt avec le deuxième identifiant et se terminant au plus tard avec le délimiteur CRC, un deuxième identifiant (BRS) n'apparaissant qu'en présence du premier identifiant (EDL) et dans celui-ci se produisant un champ de commande des messages qui, à la différence de la norme CAN ISO 11898-1, comporte plus de six bits.

21. Procédé selon la revendication 20, le deuxième identifiant (BRS) étant effectué par un bit récessif dans le champ de commande qui est transmis postérieurement dans le temps au bit du premier identifiant (EDL).

22. Procédé selon la revendication 21, dans lequel, en présence du deuxième identifiant, le bit récessif du deuxième identifiant (BRS) est séparé du bit récessif du premier identifiant (EDL) par au moins un bit dominant.

23. Procédé selon l'une des revendications 19 à 22, dans lequel, en présence du deuxième identifiant (BRS), des valeurs différentes peuvent être utilisées pour un paramètre de base de temps de bit dans les zones de longueur binaire plus longue et plus courte.

24. Procédé selon l'une des revendications 19 à 23, les différentes valeurs de la longueur binaire à l'intérieur du message étant réalisées en utilisant des facteurs de mise à l'échelle (prédiviseurs) différents pour le réglage de l'unité de temps du bus par rapport à une plus petite unité de temps ou au cycle de l'oscillateur en cours de fonctionnement.

25. Utilisation du procédé selon l'une des revendications 1 à 24 dans le fonctionnement normal d'un véhicule automobile pour la transmission de données entre au moins deux contrôleurs du véhicule automobile, lesquels sont reliés par le biais d'un bus de données approprié.

26. Utilisation du procédé selon l'une des revendications 1 à 24 dans le fonctionnement d'installations de commande industrielles pour la transmission de données entre au moins deux unités de commande, lesquelles sont reliées par le biais d'un bus de données approprié.

27. Utilisation du procédé selon l'une des revendications 1 à 24 pendant la fabrication ou la maintenance d'un véhicule automobile pour la transmission de données entre une unité de programmation, reliée à un bus de données approprié à des fins de programmation, et au moins un contrôleur du véhicule automobile, lequel est relié au bus de données.

28. Dispositif de transmission de données en série contrôlée dans un système de bus comportant au moins deux périphériques de bus, les périphériques de bus étant raccordés au bus par le biais d'une unité de raccordement de bus et échangeant des messages par le biais du bus, l'accès en émission au bus pour chaque message étant attribué par le procédé d'arbitrage selon la norme CAN ISO 11898-1 à un périphérique de bus qui devient émetteur pour ce message, les messages possédant une structure logique selon la norme CAN, c'est-à-dire qu'ils sont constitués d'un bit de début de trame, d'un champ d'arbitrage, d'un champ de commande, d'un champ de données, d'un champ CRC, d'un champ de confirmation de réception et d'un champ de fin de trame,
le dispositif comprenant des moyens qui sont conçus pour contrôler un fonctionnement correct de la transmission de données pendant la transmission par une comparaison d'un signal d'émission (CAN_TX) envoyé à l'unité de raccordement de bus avec un signal de réception (CAN_RX) reçu par l'unité de raccordement de bus,
**caractérisé en ce que** le dispositif comprend une unité de retard (310) appropriée qui est conçue pour générer un signal d'émission retardé (CAN_TX_DEL) d'un temps de retard (T_DELAY) par rapport au signal d'émission (CAN_TX),
et **en ce que** le dispositif comprend une unité de permutation (330) au moyen de laquelle la concordance entre le signal d'émission non retardé (CAN_TX) et le signal de réception (CAN RX) est contrôlée ou la concordance entre le signal d'émission retardé (CAN_TX_DEL) et le signal de réception (CAN_RX) est contrôlée, suivant une permutation, pour le contrôle du bon fonctionnement de la transmission de données

29. Dispositif selon la revendication 28, le dispositif comprenant une unité de comparaison (320) qui interprète une liaison du signal d'émission retardé (CAN_TX_DEL) d'un temps de retard (T_DELAY) avec le signal de réception (CAN_RX) et à un instant de comparaison (T_CMP).

**30.** Dispositif selon la revendication 28, l'unité de permutation (330) étant réalisée pour pouvoir être permutée par une atteinte ou une interprétation d'un bit prédéfini ou pouvant être prédéfini à l'intérieur du message qui vient d'être envoyé et/ou par l'application d'un signal (SWT) prévu à cet effet.

**31.** Dispositif selon l'une des revendications 28 à 30, le dispositif comprenant un compteur de retard (305) qui détermine un retard dans le temps (DELTA_T) entre le signal d'émission (CAN_TX) et le signal de réception (CAN_RX) et délivre une valeur pour le temps de retard (T_DELAY) en fonction du résultat.

**32.** Dispositif selon l'une des revendications 28 à 31, le dispositif comprenant une zone de mémoire pour N enregistrements de valeurs mesurées du retard dans le temps (DELTA_T_1, ..., à DELTA_T_N) et un élément de commande approprié pour l'exécution d'un calcul de valeur moyenne (DELTA_T_MEAN) à partir d'enregistrements de la zone de mémoire.

**33.** Dispositif selon l'une des revendications 28 à 32, le dispositif étant conçu pour, par des moyens appropriés, mettre en oeuvre au moins l'un des procédés selon les revendications 2 à 24.

## Standard Format Can

| | Arbitration Field | | Control Field | Data Field | CRC Field | ACK | EOF | Int. | Bus Idle |
|---|---|---|---|---|---|---|---|---|---|

R

| S O F | 11 bit Identifier | R T R | I D E | r 0 | 4 bit DLC | 0-8 bytes | 15 bit CRC | 1 | 1 | 1 | 7 | 3 | |

D

## Extended Format Can

| | Arbitration Field | | | Control Field | Data Field | CRC Field | ACK | EOF | Int. | Bus Idle |
|---|---|---|---|---|---|---|---|---|---|---|

R

| S O F | 11 bit Identifier | S R R | I D E | 18 bit Identifier Extension | R T R | r 1 | r 0 | 4 bit DLC | 0-8 bytes | 15 bit CRC | 1 | 1 | 1 | 7 | 3 | |

D

SOF   = Start Of Frame
RTR   = Remote Transmission Request
SRR   = Substitute Remote Request
RTR   = Identifier Extension Bit

## Fig. 1a

EP 2 751 956 B1

## Standard Format Can FD „Long"

| | Arbitration Field | | | Control Field | | | | | Data Field | CRC Field | ACK | EOF | Int. | Bus Idle |

R — | SOF | 11 bit Identifier | RTR | IDE | EDL | r0 | BRS | ESI | 4 bit DLC | 0-K bytes | L bit CRC | 1 1 1 | 7 | 3 | | D

## Extended Format Can FD „Long"

| | Arbitration Field | | | | | Control Field | | | | Data Field | CRC Field | ACK | EOF | Int. | Bus Idle |

R — | SOF | 11 bit Identifier | SRR | IDE | 18 bit Identifier Extension | RTR | EDL | r0 | BRS | ESI | 4 bit DLC | 0-K bytes | L bit CRC | 1 1 1 | 7 | 3 | | D

Fig. 1b

EP 2 751 956 B1

## Standard Format Can FD „Fast"

## Extended Format Can FD „Fast"

**Fig. 1c**

EP 2 751 956 B1

Fig. 2a

Fig. 2b

Fig. 2c

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Bosch Kraftfahrtechnisches Handbuch. 2011

- CAN with Flexible Data-Rate. *CAN WITH FLEXIBLE DATA-RATE WHITE PAPER*